(19)

Europäisches
Patentamt

European
Patent Office

Office européen
des brevets

(11)    **EP 2 144 158 B1**

(12)    **EUROPEAN PATENT SPECIFICATION**

(45) Date of publication and mention
of the grant of the patent:
**07.01.2015 Bulletin 2015/02**

(51) Int Cl.:
***G06F 9/38*** *(2006.01)*    ***G06F 15/80*** *(2006.01)*

(21) Application number: **08739014.2**

(86) International application number:
**PCT/JP2008/055885**

(22) Date of filing: **27.03.2008**

(87) International publication number:
**WO 2008/123361 (16.10.2008 Gazette 2008/42)**

(54) **RECONFIGURABLE SIMD PROCESSOR AND ITS EXECUTION CONTROL METHOD**

WIEDERKONFIGURIERBARER SIMD-PROZESSOR UND SEIN
AUSFÜHRUNGSSTEUERUNGSVERFAHREN

PROCESSEUR SIMD RECONFIGURABLE ET SON PROCÉDÉ DE CONTRÔLE D'EXÉCUTION

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **29.03.2007 JP 2007088656**

(43) Date of publication of application:
**13.01.2010 Bulletin 2010/02**

(73) Proprietor: **NEC Corporation
Minato-ku
Tokyo 108-8001 (JP)**

(72) Inventor: **NOMOTO, Shohei
Tokyo 108-8001 (JP)**

(74) Representative: **Vossius & Partner
Siebertstrasse 4
81675 München (DE)**

(56) References cited:
**WO-A1-99/31601      JP-A- 06 051 984
JP-A- 10 091 439      JP-A- 2002 229 962
US-A- 5 218 709**

- **FINEBERG S A ET AL: "Experimental analysis of
communication/data-conditional aspects of a
mixed-mode parallel architecture via synthetic
computations", PROCEEDINGS OF THE
SUPERCOMPUTING CONFERENCE. NEW YORK,
NOV. 12 - 16, 1990; [PROCEEDINGS OF THE
SUPERCOMPUTING CONFERENCE],
WASHINGTON, IEEE COMP. SOC. PRESS, US,
vol. CONF. 3, 12 November 1990 (1990-11-12),
pages 637-646, XP010019984, DOI: DOI:
10.1109/SUPERC.1990.130080 ISBN:
978-0-8186-2056-0**

**EP 2 144 158 B1**

## Description

The present application claims priority rights based on the Japanese Patent Application 2007-088656 filed in Japan on March 29, 2007.

This invention relates to a reconfigurable SIMD processor and, more particularly, to a reconfigurable SIMD processor capable of efficiently implementing a multi-cycle instruction.

Recently, with increase in the general feeling of expectation for higher safety and impeccable crime prevention, security cameras are installed in many places, and diversified video processing for images acquired from cameras has begun to be used to avoid car accidents or to manage entrance to or exiting from an office. Since this sort of video processing requires a large amount of computation in a short time, processors for parallel processing, capable of processing a large amount of data at high speed, are currently used.

As one of the parallel processors, a SIMD (Single Instruction Multiple Data) processor, capable of allowing for parallel operations of a large number of processing elements (PEs) based on a single operational instruction, has been developed.

The SIMD processor may exhibit high performance because it allows for parallel operations of larger numbers of PEs. In addition, since larger numbers of PEs can be controlled in common, it is sufficient to generate the sole control information, and hence a smaller number of control circuits suffice to render it possible to reduce the circuit size.

On the other hand, since the SIMD processor includes larger numbers of PEs, the circuit size of the SIMD processor is appreciably increased as the single PE becomes higher in its function and more complex in its configuration. That is, the complexity of the configuration of a PE is in a relationship of trade-off to the number of the PEs.

In actuality, in Non-Patent Document 1, simple processing, such as SAD (Sum of Absolute Difference) is executed at a high speed using larger numbers of simple PEs each composed of a 2-bit ALU (Arithmetic Logic Unit). In Patent Documents 1 and 2, a smaller number of complicated PEs, each provided with a floating decimal point operation unit, is used to implement complicated processing, such as 3DCG.

In Patent Document 3, which is not relevant to a SIMD processor, there is disclosed a CISC processor with an increased operation speed. With this processor, simple instructions, which may be executed in one cycle, are executed in parallel using a plurality of pipelines independently each other. In addition, an instruction of higher function, in need of processing of a large amount of data and complicated processing, is executed using a plurality of pipelines at the same time to expedite the processing.

Non-Patent Document 1: M. Nakajima et al., "A 40 GOPS 250 mW Massively Parallel Processor Based on Matrix Architecture", 2006 IEEE International Solid-State Circuits Conference Digest of Technical Paper step 2006, February 6, pp1616 ~ 1625
Patent Document 1: JP2000-148695A
Patent Document. 2: JP2001-256199A
Patent Document 3: JP-A-6-51984.

The total of the contents disclosed in the Patent Documents 1 to 3 and the Non-Patent Document 1 is to be incorporated by reference herein. The following gives the analysis of the related arts by the present invention.

In the conventional SIMD processor, the performance and the number of the PEs are fixed. Hence, a problem is presented that subjects for processing having different characteristics may not be coped with flexibly.

For this reason, in the Non-Patent Document 1, 2048 simple PEs, each made up of a 2-bit operation unit, are used to carry out a simple operation. For an operation in need of precision of two or more bits, neighboring multiple PE operation units are used in combination.

However, if simply a plural number of PE operation units are used in combination, the processing performance of the SIMD processor in its entirety may not be improved as desired.

As an example, let it be assumed that sixteen 8-bit addition operations are to be carried out using a processor including 16 PEs each made up of a 2-bit adder.

If 4 PEs are connected to carry out 8-bit addition, since each cycle is able to perform four (= 16/4) operations, sixteen 8-bit addition operations can be carried out in four cycles.

On the other hand, 4 cycles are needed to carry out one 8-bit addition in case an individual PE executes carry addition every two bits. However, since sixteen 8-bit addition operations may be carried out simultaneously, sixteen 8-bit addition operations can be carried out in four cycles.

That is, if simply a plurality of operation units of the same sorts of a plurality of PEs are combined together, the SIMD processor on the whole may not be expected to be improved in performance. The range of application of the processor also is limited to, for example, changing the bit widths of the operations. It is thus not possible to flexibly cope with subjects for processing having different characteristics.

In consideration of the above problems, it is an object of the present invention to provide a reconfigurable processor for parallel processing which, in comparison with a SIMD processor including the same number of PEs, is capable of flexibly coping with subjects for processing differing in characteristics with only small increase in resources, thereby enabling the performance to be improved on the whole and a method for controlling the instruction execution of the SIMD processor.

The problems underlying the invention are solved with the features of the claims.

The invention disclosed in the present application may be summarized substantially as follows:

In a processor for parallel operations, according to the present invention, a unit for operation, performing an instruction, composes one group. If one such group is composed of a plurality of processing elements (PEs), the unit of operation of the one group is a unit executing an instruction more complex than a unit of an instruction executable in case one PE composes one group. The processor includes a plurality of PEs (processing elements) capable of performing operations with a number of the PEs as one group. The number of the PEs that compose the one group is changed in accordance with the instruction.

According to the present invention, the information regarding the configuration of the PEs that make up the group is pre-retained in accordance with the instruction. The configuration of the PE is varied in accordance with the instruction, based on the information.

According to the present invention, in case the instruction is a multi-cycle instruction executed by a plurality of PE cycles, the description of the configuration of pipelining registers is provided in the information.

According to the present invention, in case the one group is formed by a single PE, the PE includes a general purpose register that stores the result of PE's operations. In case the one group is formed by a plurality of PEs executing the multi-cycle instruction, the general purpose registers are used as pipelining registers.

According to the present invention, in case the one group is formed by a plurality of PEs executing the multi-cycle instruction, the operation units and the general purpose registers of each of the PEs form at least a part of the operation units and the pipelining registers that execute the multi-cycle instruction.

According to the present invention, in case the multi-cycle instruction is a multi-cycle integer divide instruction, the one group is formed by a plurality of PEs. The first PE in the one group operates as a counter that counts the number of cycles of the multi-cycle integer divide instruction. The second PE in the one group, different from the first PE, is responsive to the counter to subtract a divisor from a dividend of the multi-cycle integer divide instruction a number of times equal to the number of cycles.

According to the present invention, the first PE includes an adder/subtractor and a general purpose register. In executing the multi-cycle integer divide instruction, the first PE stores a cycle count value in the general purpose register of the first PE and updates the count value by the adder/subtractor.

According to the present invention, the second PE includes an adder/subtractor and a general purpose register. In executing the multi-cycle integer divide instruction, the second PE stores a divisor, a dividend and an intermediary division result in the general purpose register. The adder/subtractor subtracts the dividend from the divisor and stores the result of the division in the general purpose register as the intermediary division result.

According to the present invention, in case the multi-cycle instruction is a multi-cycle floating decimal point add/ subtract instruction, the one group includes a plurality of PEs. The first PE in the one group performs addition/ subtraction of a floating decimal point operand, and the second PE in the one group differing from the first PE performs the processing for normalizing the result of the addition/ subtraction.

According to the present invention, the first PE includes an adder/subtractor, a differentiator, a barrel shifter and a general purpose register. In executing the multi-cycle floating decimal point add/ subtract instruction, the differentiator and the barrel shifter effect the decimal point position registration. The adder/subtractor adds/ subtracts the results of the decimal point position registration. The general purpose register is to be a site of temporary storage of the result of the decimal point position registration and the result of the addition/ subtraction.

According to the present invention, the first PE includes an adder/subtractor, a differentiator, a barrel shifter, a general purpose register and a normalizing controller. In executing the multi-cycle floating decimal point add/ subtract instruction, in the second PE, the adder/subtractor, the differentiator and the barrel shifter normalize the result of addition/ subtraction of the first PE under control by the normalizing controller. The general purpose register is to be a site of temporary storage of an intermediary result of the normalization.

According to the present invention, in case the multi-cycle instruction is a floating decimal point multiply instruction, the one group includes a plurality of PEs. A first PE in the one group executes processing of multiplication of two floating decimal point operands and part of normalization of the result of multiplication. A second PE in the group different from the first PE operates in cooperation with the first PE to normalize the result of the multiplication.

According to the present invention, the first PE includes a multiplier, a barrel shifter, a leading-one circuit and a general purpose register. In executing the multi-cycle floating decimal point multiply instruction, the multiplier in the first PE multiplies the mantissa parts of operands. The barrel shifter effects part of normalization of result of the multiplication. The general purpose register is to be a site of temporary storage of the result of the multiplication of an intermediary result of the normalization.

According to the present invention, the first PE includes an adder, a barrel shifter, a general purpose register and a normalization controller. In executing the multi-cycle floating decimal point multiply instruction, in the first PE, the adder/subtractor, the barrel shifter and the barrel shifter of the first PE normalize the result of the multiplication under control by the normalization controller. The general-purpose register is to be a site of temporary storage of an intermediary result of the normalization.

According to the present invention, in case the multi-cycle instruction is a multi-cycle floating decimal point divide instruction, the one group includes a plurality of PEs. The first PE in the one group performs division of two floating decimal point operands, and the second PE in the one group, different from the first PE, counts the cycles of executing the division and normalizes the result of the division.

According to the present invention, the first PE includes an adder and a general purpose register. In executing the multi-cycle floating decimal point divide instruction, in the first PE, a divisor, a dividend and an intermediary result of division are stored in the general purpose register. The dividend is subtracted by the adder/subtractor from the divisor, and the result of subtraction is stored in the intermediary result of division.

According to the present invention, the second PE includes an adder, a barrel shifter, a general purpose register and a normalization controller. In executing the multi-cycle floating decimal point divide instruction, in the second PE, the cycle count value is stored in the general purpose register, and the counter value is updated by the adder/subtractor. The result of division of the first PE is normalized by the adder and the barrel shifter under control by the normalization controller. The general purpose register is to be a temporary site of storage of an intermediary result of the normalization.

According to the present invention, the operation units of first and second PEs are connected via an inter-PE operation unit connection path 50.

According to the present invention, the first PE includes a control circuit, a general purpose register set, made up of a plurality of PEs, an operation unit set and a data memory. An output of the general purpose register set is selected by a selector (mux1-0) controlled by the control circuit, and is delivered as operands of an instruction for operations to the operation unit set and to the data memory. The operation unit set includes an adder/subtracter, a multiplier and a barrel shifter. The respective operation units of the operation unit set perform operations on the operands delivered from the selector (mux1-0) under control by the control circuit. The result of the operations by the operation unit set is selected by a selector (mux1-1), controlled by the control circuit, so as to be supplied to a selector (mux5). The data memory writes an output of the selector (mux1-0) and data from an external memory data transfer network in memory devices, under control by the control circuit, and data read out from the memory devices are supplied to the selector (mux5) and to the external memory data transfer network. The selector (mux5) selects one of the result of selection of the selector (mux1-1), the read result of the data memory and the contents of the second PE register provided via the inter-PE operation unit connection path, under control by the control circuit. The so selected one is supplied to the general purpose register set.

According to the present invention, the second PE includes a control circuit, a general purpose register set, an operation unit set and a data memory. The operation unit set includes an adder/subtractor, a multiplier and a barrel shifter. An output of the general purpose register set is selected by the selector (mux2-0), controlled by the control circuit, so as to be supplied to the operation unit set and to the data memory. The second PE further includes a second selector (mux0) that selects one of the result of selection of the selector (mux4) and the result of selection of the selector (mux3), under control by the control circuit, to supply the so selected one to the first register of the register set. The second PE further includes a third selector (mux1) that selects one of the selected result of the selector (mux4) and a bit string read out from the second register of the register set from which the LSB (Least Significant Bit) has been removed and to the MSB (Most Significant Bit) of which is added 0. The selector (mux1) supplies the so selected one to the second register. The second PE further includes a fourth selector (mux2) that selects one of the selected result of the sixth selector (mux4) and a bit string read out from the third register of the register set from which the MSB has been removed and to the LSB of which is added the MSB of the result of subtraction of the adder/subtractor. The selector (mux2) supplies the so selected one to the third register.

The operation unit set performs an operation on the operands delivered from the selector (mux2-0) under control by the control circuit. The result of the operation is selected by a selector (mux2-1) controlled by the control circuit and is supplied to the sixth selector (mux4).

The data memory writes an output of the selector (mux2-0) and data from an external memory data transfer network in memory devices and sends data read out from the memory devices to the selector (mux4) and to the external memory data transfer network.

The fifth selector (mux3) selects one of the result of the arithmetic operation of the adder/subtractor and the one operand selected by the selector (mux2-0) udder control by the control circuit. The selector (mux3) supplies the so selected one to the selector (mux0).

The sixth elector (mux4) selects one of the result of selection by the seventh selector (mux2-1) and the read result of the data memory, under control by the control circuit, to supply the so selected one to the general purpose register set to update the register set.

According to the present invention, there is provided a method for controlling instruction execution by a processor for parallel operations including a plurality of processing elements (PEs). The number of PEs that share the instruction for execution thereof is varied in dependence upon the instructions executed.

The reconfigurable processor according to the present invention is made up of a plurality of processing elements (PEs) that perform operations as one group, which one group is a unit of instruction execution as a minimum unit executing an instruction more complex than an instruction executable by a single PE. The number of the PEs that go to make up a group is varied depending on the instruction. The processor is thereby able to flexibly cope with subjects for processing of different characteristics to enable the performance to be improved on the whole as resources are suppressed from increasing in volume.

BRIEF DESCRIPTION OF THE DRAWINGS

Fig.1 is a block diagram showing the global configuration of an exemplary embodiment of the present invention.

Fig.2 is a block diagram showing a detailed configuration of a PE of the first exemplary embodiment of the present invention.

Fig.3 is a flowchart for illustrating the operation of the first exemplary embodiment of the present invention.

Fig.4 is a timing chart showing the operation of the first exemplary embodiment of the present invention.

Fig.5 is a view showing the single precision bit representation of IEEE754.

Fig.6 shows an expression for computing the number of single precision floating decimal points of IEEE754.

Fig.7 is a block diagram showing a detailed configuration of a first PE of a second exemplary embodiment of the present invention.

Fig.8 is a block diagram showing a detailed configuration of a second PE of a second exemplary embodiment of the present invention.

Fig.9 is a flowchart for illustrating the operation of the second exemplary embodiment of the present invention.

Fig. 10 is a timing chart for illustrating the operation of the second exemplary embodiment of the present invention.

Fig.11 is a tabulated view for illustrating the control information generation rule for an adder/subtracter in the second exemplary embodiment of the present invention.

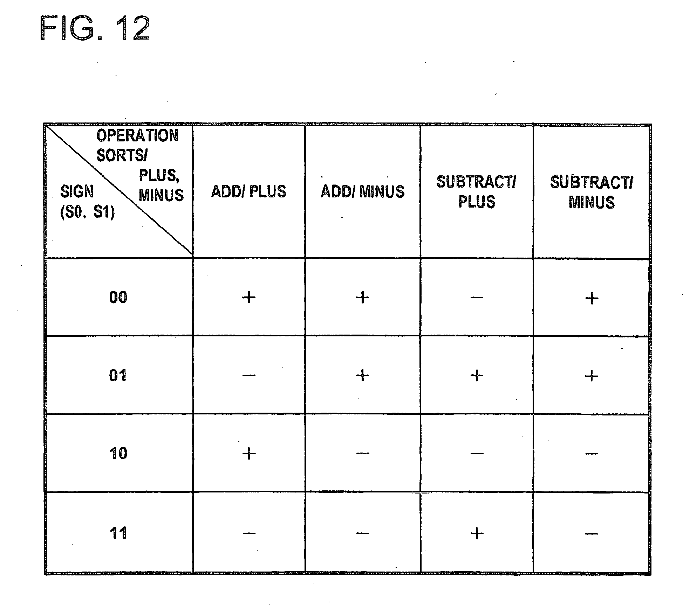

Fig.12 is a tabulated view for illustrating the plus/minus generation rule for the result of the operations in the second exemplary embodiment of the present invention.

Fig.13 is a block diagram showing a detailed configuration of a first PE in a third exemplary embodiment of the present invention.

Fig.14 is a block diagram showing a detailed configuration of a second PE in the third exemplary embodiment of the present invention.

Fig.15 is a flowchart for illustrating the operation of the third exemplary embodiment of the present invention.

Fig.16 is a timing chart showing the operation of the third exemplary embodiment of the present invention.

Fig.17 is a block diagram showing a detailed configuration of a first PE of a fourth exemplary embodiment of the present invention.

Fig.18 is a block diagram showing a detailed configuration of a second PE of a fourth exemplary embodiment of the present invention.

Fig.19 is a flowchart for illustrating the operation of the fourth exemplary embodiment of the present invention.

Fig.20 is a timing chart showing the operation of the fourth exemplary embodiment of the present invention.

Certain preferred exemplary embodiments of the present invention will now be described in detail with reference to the drawings.

<Exemplary embodiment 1>

In the exemplary embodiment 1, a reconfigurable SIMD processor in which, when a group is made up of a plurality of PEs, such group executes a multi-cycle integer divide instruction.

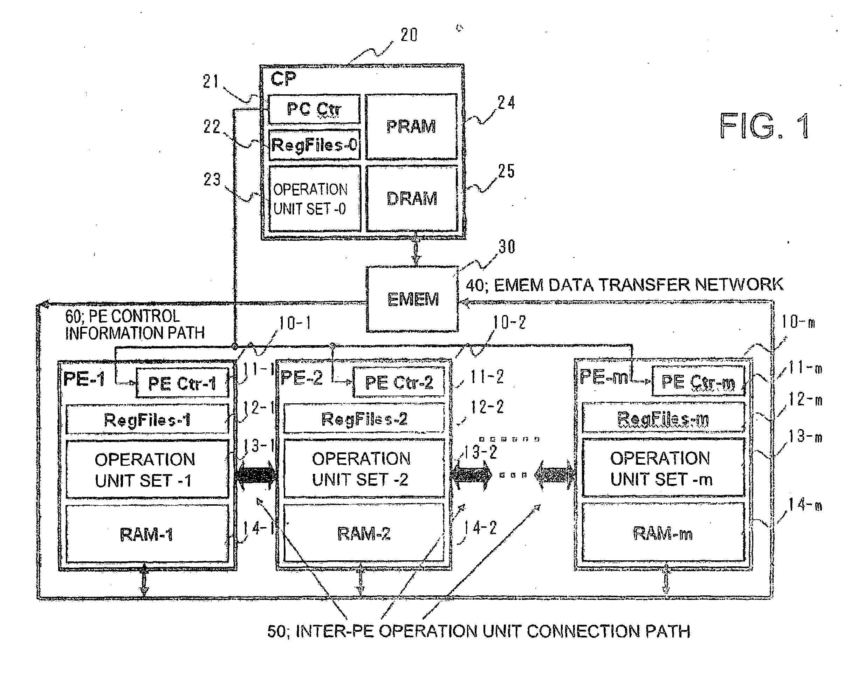

Fig. 1 is a block diagram showing an arrangement of the exemplary embodiment 1 of the present invention. Referring to Fig.1, the reconfigurable SIMD processor includes processing elements PE-1 ~ PE-m (10-1 ~ 10-m), a control processor CP (20) which controls PE-1 ~ PE-m, and an external memory EMEM (30) in which to write data from PE-1 ~ PE-m and CP and from which to read data to PE-1 ~ PE-m and CP. EMEM (30) is connected to PE-1 ~ PE-m via EMEM data transfer network 40, while PE-1 ~ PE-m are connected over an inter-PE operation unit connection path 50.

The PE-1 ~ PE-m include controllers PE Ctr-1 ~ PE Ctr-m (11-1 to 11-m), which controls the operations of the respective PEs, a set of operation unit -1 ~ a set of operation units -m (13-1 to 13-m), each set of which carries out operations, a set of general purpose registers RegFiles-1 ~ a set of RegFiles-m (12-1 to 12-m), and internal memories RAM-1 to RAM-m (14-1 ~ 14-m). The general purpose registers supply operands to the set of operation units -1 ~ the set of operation units -m, while storing the results of the operations of the operation unit sets therein. The internal memories read data from or write data to the RegFiles-1 ~ RegFiles-m and EMEM.

The control processor CP (20) includes a control information generation circuit PC Ctr(21) that generates an instruction flow for the SIMD processor and the control information for controlling the PE Ctr-1 ~ PE Ctr-m, a program memory PRAM (24) that stores a program, and a set of operation units -0 (23) that execute operations, a set of general purpose registers -0 (22) that supply operands to the set of operation units -0 and that store the results of the operations therein, and a data memory DRAM (25) that reads or writes data between it and the RegFiles-0 as well as the EMEM (30).

The control information of PC Ctr(21) of CP(20) is supplied via a PE control information bus 60 to PE Ctr-1 ~ PE Ctr-m.

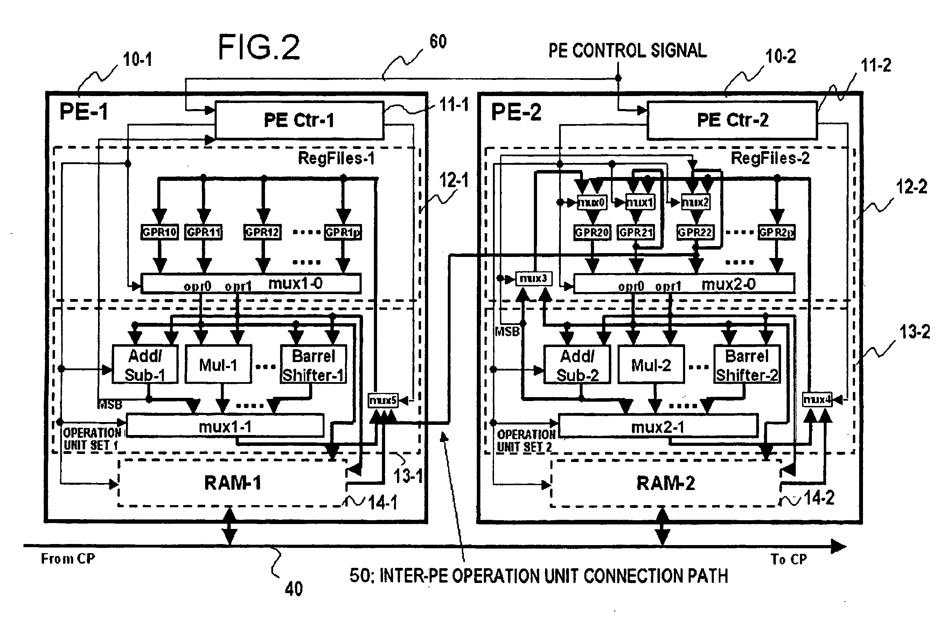

Fig.2 is a block diagram showing a detailed internal structure of the PE-1 and the PE-2 of Fig.1. In the present exemplary embodiment, such a case where one group is made up of two PEs in case one such group executes a multi-cycle integer divide instruction, will be described. However, it is as a matter of course that the present invention is not to be limited to this configuration. One group suffices to be made up of two or more PEs.

The roll sharing between PE-1 and PE-2, which will now be described, is only by way of illustration, such that it may be freely changed within the framework of the present invention.

As shown in Fig.2, the general purpose register set RegFiles-1 of PE-1 includes a plurality of registers GPR 10 ~ GPR 1p. The registers GPR 10 ~ GPR 1p are updated by the results of selection by a selector mux5.

A selector mux1-0, controlled by the PE Ctr-1, selects outputs of f the general purpose register set, and so selected outputs are delivered as operand (opr0, opr1) to the operation unit set -1 and to RAM -1.

The operation unit set -1 of PE-1 includes an adder/subtractor Add/ Sub-1, a multiplier Mul-1 and a barrel shifter Barrel Shifter -1. These operation units perform operations on the operands (opr0, opr1) supplied thereto from the general purpose resister set RegFiles-1 under control by the PR Ctr-1.

The results of the operations are selected by a selector mux1-1 controlled by the PR Ctr-1. The so selected result of the operations is supplied to the selector mux5.

The configuration of the operation unit set -1 of PE-1, shown in Fig.2, is merely illustrative and may at least be formed by a plurality of operation units performing different sorts of the operations.

The RAM-1 of PE-1 includes a plurality of memory elements, and writes data from the general purpose register set RegFiles-1 and from the EMEM data transfer network in its memory devices.

The data read from the memory devices of the RAM -1 are supplied to the selector mux5 and to an EMEM data transfer network 40.

The selector mux5 selects one of
the result of selection by the selector mux1-1;
the result read from RAM -1; and
a register GPR 22 of PE-2 delivered via the inter-PE operation unit connection path 50, under control by PE Ctr-1. The selector mux5 supplies the so selected one to the general purpose register set RegFiles-1.

A general purpose register set RegFiles-2 of PE-2 includes a plurality of registers GPR 20 ~ GPR 2p. The registers GPR 20, GPR 21 and GPR 22 are updated by the results of selection by the selectors (mux0, mux1, mux2), while GPR 23 ~ GPR 2P are updated by the results of selection by the selector mux4. Outputs of the registers are selected by the selector mux2-0, controlled by the PE Ctr-2, so as to be supplied as operands (Opr0, Opr1) to the operation unit set -2 and to RAM -2.

Based on control by PE Ctr-2, the selector mux0 selects the result of selection of the selector mux4 or that of the selector mux3 to supply the so selected result to the GPR 20.

Based on control by PE Ctr-2, the selector mux1 selects one of the result of selection by the selector mux4 and a bit string which has been read from the GPR 21 and got rid of the LSB (Least Significant Bit) and to the MSB (Most Significant Bit) of which is added 0 and provides the so selected one to the GPR 21.

Based on control by PE Ctr-2, the selector mux2 selects one of the result of selection by the selector mux4 and a bit string which has been read from the register GPR 21 and got rid of the MSB (Most Significant Bit) and to the LSB (Least Significant Bit) of which the MSB of the result of the subtraction of Add/Sun-2 is added. The selector mux2 provides the so selected one to the GPR 22. An output of the GPR 22 is supplied via the inter-PE operation unit connection path 50 to the selector mux5 of the PE-1.

An operation unit set -2 of PE-2 includes an adder/subtractor Add/ Sub-2, a multiplier Mul-2 and a barrel shifter Barrel Shifter -2. These operation units perform operations on the operands supplied thereto from the general purpose resister set RegFiles-2, under control by the PE Ctr-2.

The results of the operations are selected by a selector mux2-1 controlled by the PR Ctr-2. The so selected result of the operations is supplied to the selector mux4.

The configuration of the operation unit set -2 of PE-2, shown in Fig.2, is merely illustrative and may at least be configured y a plurality of operation units performing different sorts of the operations.

The RAM -2 of PE-2 includes a plurality of memory devices. The RAM -2 of PE-2 writes data from the set of general purpose registers RegFiles-1 and the EMEM data transfer network 40 in the memory devices, or provides the data read from the memory devices to the selector mux4 and to the EMEM data transfer network 40, under control by the PE Ctr-1.

The selector mux3 selects the result of the operation by the adder/subtractor Add/Sub- 2 and one opr0 of the operands, selected by the selector mux2-0, to supply the result of the operations and the operand opr0, thus selected, to the selector mux0.

The selector mux4 selects one of the result of selection by the selector mux2-1 and the result read from RAM -2, under control by the PE Ctr-2, and supplies the so selected one to the general purpose register set Reg-Files-2.

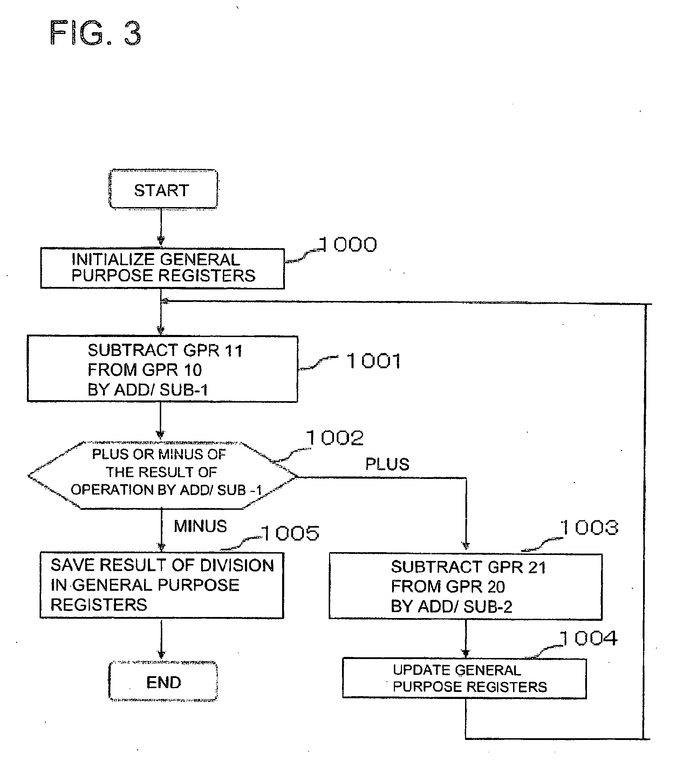

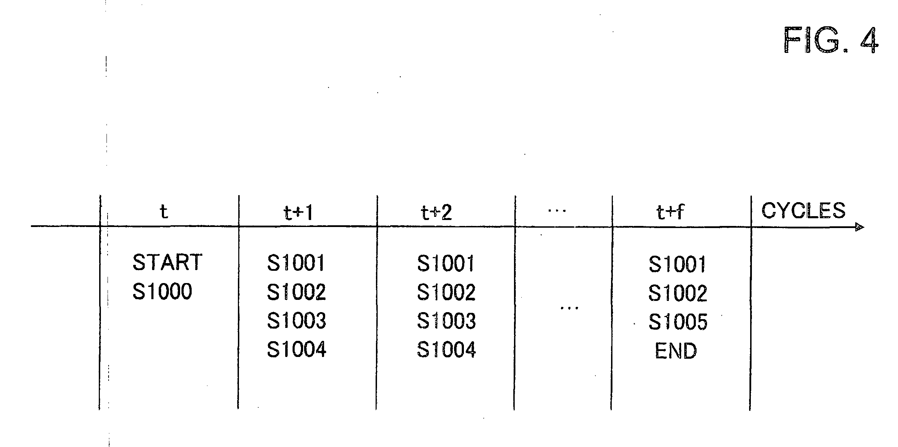

Fig.3 is a flowchart showing an example processing sequence of a reconfigurable SIMD processor, shown in Figs.1 and 2, in which, when one group is formed by a plurality of PEs, such group executes a multi-cycle integer divide instruction. Fig.4 is a timing chart showing the timings of execution of respective steps of Fig.3. Referring to Figs.2 to 4, the method of processing by the reconfigurable SIMD processor that executes the multi-cycle integer divide instruction will be described in detail.

Initially, PE-1 initializes GPR 11 to the number of cycles needed for division of GPR 10, while initializing GPR 11 to 1. The PE-2 initializes GPR 20 to a dividend, while initializing GPR 22 to 0 (step 1000).

The step S1000 is executed with the first cycle t.

In the step S1000, the registers to be initialized are GPR 10, GPR11, GPR 21 and GPR 22. However, the present invention is not limited to this configuration such that any optional registers may be subjects of the initialization.

Then, under control by the PE Ctr-1, GPR 10 and GPR 11 1 are selected as the operands (opr0, opr1) of the operation, and opr1 is subtracted from opr0 by the Add/Sub-1 (step 1001).

Here, the value 1 of opr1 is provided as a register value (GPR 11). However, the value 1 need not necessarily be the register value and may also be provided by other means, such as an immediate value.

If the result of the operation is positive, a step 1003 is executed and, if the result of the operation is negative, a step 1005 is executed. The positive and negative results of the operations are notified to Ctr-1 (step 1002).

Here, the number of times of the count operations is set in GPR 10, while 1 is set in GPR 11, and GPR 11 is subtracted from GPR 10. The number of cycles of execution of the multi-cycle integer divide instruction is counted based on the positive or negative value of the result of the subtraction.

However, the manner of counting the number of cycles is not limited to this configuration. For example, it is as a matter of course possible to use such a technique of adding 1 to an initial value 0 and to compare the result to the number of cycles needed.

If the result of the operation is positive, PE-2 selects GPR 20 and GPR 21 1 as the operands (opr0, opr1) for the operations, by the selector mux2-0, under control by PE Ctr-2, and opr1 1 is subtracted from opr0 by the adder/subtractor Add/ Sub- 2 (step 1003).

Then, in PE-1, the selectors mux1-1 and mux5 select the result of the operation by the adder/subtractor Add/Sub- 1, under control by the PE Ctr-1. The GPR 10 is updated by the result of the selection (step 1004).

In PE-2, the selector mux3 is controlled by the positive or negative value of the result of the operation by the adder/subtractor Add/Sub- 2. If the result of the operation is positive, PE-2 selects the result of the operation and, if the result of the operation is negative, PE-2 selects opr0.

The result of the selection by mux3 is selected by the selector mux0, under control by the PE Ctr-2, and the GPR 20 is updated with the result of the selection (step 1004).

Also, under control by the PE Ctr-2, the selector mux1 selects a bit string which has been read from the GPR 21 and got rid of the LSB (Least Significant Bit) and to the MSB (Most Significant Bit) of which is added 0. The selector mux1 updates the GPR 21 with the so selected value (step 1004).

Further, under control by PE Ctr-2, the selector mux2 selects a bit string which has been read from the GPR 22 and got rid of the MSB (Most Significant Bit) and to the LSB (Most Significant Bit) of which is added a value obtained by inverting the MSB of the result of the subtraction by ADD/Sub-2. The selector mux1 updates the GPR 22 with the so selected value (step 1004).

On the other hand, if the result of the operation by the adder/subtractor Add/ Sub-1 is negative, PE -2 sends the value of GPR 22, the result of the integer division, via the inter-PE operation unit connection path 50 to PE-1. The selector mux5 in PE-1 selects the result of integer division, under control by PE Ctr-1, which has been notified of the fact that the number of cycles of the division operation has reached a predetermined value. The so selected result of the integer division is written in an optional register within the general purpose register RegFiles-1 (step 1005).

Referring to Fig.4, the steps 1001 ∼ 1004 are executed in the same cycle. If the result of the operation by the adder/subtractor Add/ Sub-1 is positive, these steps are executed reiteratively. If the result of the operation by the adder/subtractor Add/ Sub-1 is negative, the steps 1001 ∼ 1005 are executed to terminate execution of the multi-cycle integer divide instruction.

Thus, with the present exemplary embodiment, in which the multiple selectors (mux0 ∼ mux3) are added and the control circuits for the selector mux5 and the PE Ctr-1, PE Ctr-2 are extended, it is possible to implement a multi-cycle integer divide instruction.

Since it is unnecessary to newly add registers or operation units of larger circuit size, the multi-cycle integer divide instruction can be implemented by only slight increase in the circuit size.

On the other hand, if the integer divide instruction is to be executed by an instruction combination that may be dealt with by a single PE, cycle control, subtraction of the divisor from the dividend and bit operations of the result of the operations need to be sequentially implemented by a pre-existing instruction. Hence, about 10 cycles are needed to compute one digit of the result of the division.

With the present exemplary embodiment, one digit of the result of division can be computed by one cycle, despite the fact that the number of instructions of the integer division is halved. Hence, the performance of the SIMD processor in its entirety may be improved by a factor of about five in comparison with the case of implementing the integer division by a single PE.

<Exemplary Embodiment 2>

In the exemplary embodiment 2 of the present invention, a reconfigurable SIMD processor in which, when one group is constituted by a plurality of PEs, such group executes the multi-cycle floating decimal point add/ subtract instruction, is described in detail. Here, single precision of IEEE754 is used as a form of expressing the number of floating decimal points.

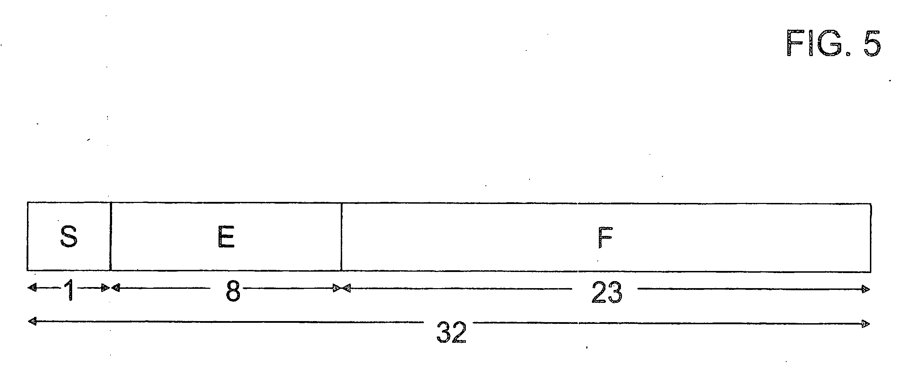

Fig.5 shows single precision bit arrangement by IEEE754. Referring to Fig.5, the single precision of IEEE754 is formed by a bit string of 32 bits, and is divided into a sign part (S), an exponent part (E) and a mantissa part (F).

A real number is represented by a $\pm$[sign part]1. [mantissa part] x 2^[exponent part]. In the following explanation, it is assumed that the sign part, exponent part and the mantissa part of the operands 0 and 1, as subjects of the operations, are S0 and S1, E0 and E1, and F0 and F1, respectively. Although the IEEE754 single precision is used as the form for representing the floating decimal point numbers, it is of course possible to use other representation forms.

The configuration of the SIMD processor in its entirety of the exemplary embodiment 2 of the present invention is similar to the exemplary embodiment 1 shown in Fig.1. Hence, explanation of the exemplary embodiment 2 with reference to Fig.1 is dispensed with.

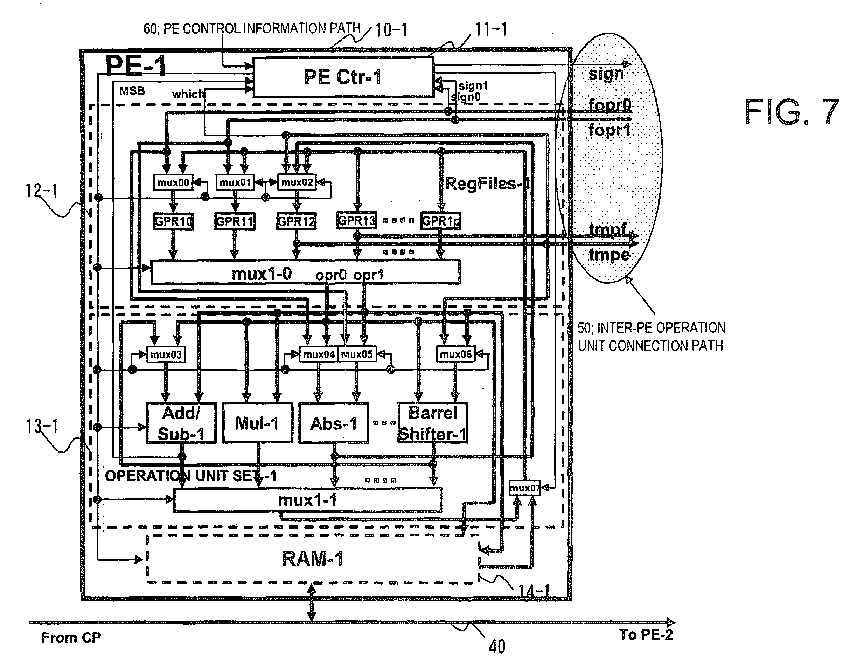

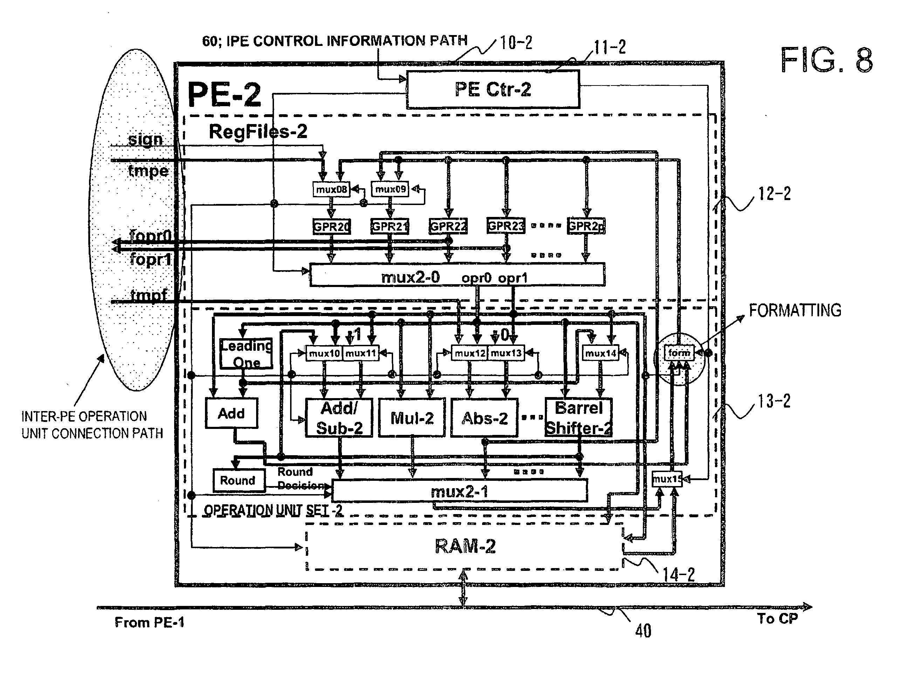

Figs.7 and 8 are block diagrams showing the detailed internal configurations of PE-1 and PE-2 of Fig.1, respectively. In the present exemplary embodiment, such a case in which, if one group executes a multi-cycle floating add- subtract instruction, the group is made up by two or more PEs. With the present invention, it is sufficient that one group incudes two or more PEs. The role sharing by PE-1 and PE-2 as now described is merely illustrative and that the present invention is not to be limited to such configuration.

Referring to Figs.7 and 8, the PE-1 receives from the PE-2 fopr0, fopr1, which are operands of the floating decimal point add/ subtract instruction, via the inter-PE operation unit connection path 50. The PE-1 then provides the PE-2 with an intermediary result of the mantissa part tmpf, an intermediary result of the exponent part tmpe and an intermediary sign result (sign). The following description is directed to PE-1, with reference being made to Fig.7.

The general purpose register set RegFiles-1 of PE-1 includes a plurality of registers GPR 10 ~ GPR 1p. The GPR 10, GPR 11 and the GPR 12 are updated by the result of selection by the selectors (mux00, mux01 and mux02), respectively, and the GPR 13 ~ GPR 1p are updated by the result of selection by the selector mux07.

The register outputs are selected by the selector mux1-0, controlled by the PE Ctr-1, and are supplied as operands (opr0, opr1) to the operation unit set -1 and to the RAM -1.

The selector mux00 selects one of fopr1 supplied from PE-2 via the inter-PE operation unit connection path 50, and the result of selection by the selector mux07, under control by PE Ctr-1, and provides the so selected one to the GPR 10.

The selector mux01 selects one of fopr1, supplied from PE-2 via the inter-PE operation unit connection path 50, and the result of selection of the selector mux07, provided from PE-2, under control by PE Ctr-1, to supply the so selected one to GPR 11.

The selector mux02 selects one of a bit string and the result of selection by the selector mux07, under control by PE Ctr-1, to supply the so selected one to GPR 12. The bit string has its lower and upper parts formed respectively by a lower order half of the result of the arithmetic operation by a differentiator Abs- 1 of the operation unit set -1 and by a lower order half of the GPR.

The operation unit set -1 of PE-1 includes
an adder/subtractor Add/Sub-1;
a multiplier Mul-1;
a differentiator Abs-1; and
a barrel shifter Barrel Shifter -1.

The adder/subtractor Add/ Sub-1 performs an arithmetic operation, under control by the PE Ctr-1, with the result of selection of the selector mux03 and opr1 as operands.

The multiplier Mul-1 performs an operation, under control by the PE Ctr-1, on the opr0 and opr1 as operands.

The differentiator Abs-1 performs an arithmetic operation, under control by the PE Ctr-1, on the results of selection of the selectors mux04 and mux05 as operands.

The barrel shifter Barrel Shifter -1 performs an operation, under control by the PE Ctr-1, on the opr0 and the result of selection by the selector mux06 as operands.

The results of the operations are selected by the selector mux1-1, controlled by the PE Ctr-1, and are provided to the selector mux07.

The selector mux03 selects one of the result of the operation by the barrel shifter Barrel Shifter -1 and the operand opr0, under control by the PE Ctr-1, and provides the so selected one to the adder/subtractor Add/Sub-1.

The selector mux04 selects one of opr0 and an exponent part E0 of fopr1, provided from the PE-2, under control by the PE Ctr-1, and provides the so selected one to the differentiator Abs-1.

The selector mux05 selects one of the exponent part E1 of fopr1, provided from the PE-2 via the inter-PE operation unit connection path 50, or the operand opr1, under control by the PE Ctr-1, and provides the so selected one to the differentiator Abs-1.

The selector mux06 selects one of a bit string and opr1, under control by the PE Ctr-1, and provides the so selected one to the barrel shifter Barrel Shifter -1. The bit string includes a lower order half of GPR 12 and zeros combined in its upper half.

The RAM-1 of the PE-1 is formed by memory devices in which to write data from the general purpose register set RegFiles-1 and data from the EMEM data transfer network 40 under control by the PR Ctr-1. Or, data read from the memory devices are supplied to the selector mux07 and to the EMEM data transfer network 40.

The selector mux07 selects the result of selection of the selector mux1-1 or the result read from the RAM-1 and provides the result of selection to the general purpose register set RegFiles-1 1

Referring to Fig.8, the PE-2 receives from the PE-1 an intermediary result of the mantissa part tmpf, an intermediary result of the exponent part tmpe and an intermediary sign result (sign), which are intermediary results of the floating decimal point add/ subtract instruction. The PE-2 provides fopr0, fopr1, which are operands of the floating decimal point add/ subtract instruction, to the PE-1.

Referring to Fig.8, the general purpose register set RegFiles-2 of the PE-2 includes a plurality of registers GPR 20 - GPR 2p. The GPR 20 and GPR 21 are updated by the result of selection by the selectors (nmux08, mux09), respectively, and the GPR 22 ~ GPR 2p are updated by the result of selection by the formatting unit (form). The outputs of the above registers are selected by the selector mux2-0, controlled by the PE Ctr-2, so as to be supplied as operands (opr0, opr1) to the operation unit -2 and to the RAM -2.

The selector mux08 selects one of a bit string and the result of selection by the selector mux15, under control by the PE Ctr-2, via the inter-PE operation unit connection path 5, and provides the so selected one to the GPR 20. The bit string has its lower order part formed by the intermediary exponent part result tmpe, supplied from PE-2, while having an intermediary sign result (sign) as its upper order bit.

The selector mux09 selects one of the result of the operation by the differentiator Abs-2 of the operation unit set -2 and the result of selection of the selector mux15, under control by the PE Ctr-2. The selector mux09 provides the so selected one to the GPR 21.

The operation unit set -2 of the PE -2 includes an adder/subtractor Add/ Sub-2, a multiplier Mul-2, a differentiator Abs -2 and a barrel shifter Barrel Shifter -2.

The adder/subtractor Add/ Sub-2 performs an operation on the results of selection by the selectors mux10 and mux11, as operands, under control by the PE Ctr-2.

The multiplier Mul-2 performs an operation on opr0 and opr1, as operands, under control by the PE Ctr-2.

The differentiator Abs-2 performs an operation on the results of selection by the selector mux12 and the selector mux 13 as operands, under control by the PE Ctr-2.

The barrel shifter Barrel Shifter -2 performs an operation on opr0 and the result of selection by the selector mux14, as operands, under control by the PE Ctr-2.

The result of the operation is selected by the selector mux2-1 controlled by the PE Ctr-2. The so selected result is supplied to the selector mux15.

The selector mux10 selects one of the result of the operation by the barrel shifter Barrel Shifter -2 and opr0, under control by the PE Ctr-2, and provides the so selected one to the adder/subtractor Add/ Sub-2.

The selector mux11 selects one of the value 1 and opr1, under control by the PE Ctr2, under control by the PE Ctr-2, and provides the so selected one to the adder/subtractor Add/ Sub-2.

The selector mux12 select one of the intermediary result of the mantissa part tmpf, supplied from the PE-1, under control by the PE Ctr-2, via the inter-PE operation unit connection path 50, and opr0, and provides the so selected one to the differentiator Abs-1.

The selector mux13 selects one of the value 0 and opr1, under control by the PE Ctr-2, and provides the so selected one to the differentiator Abs-2.

The selector mux14 selects one of the result of the operation of a leading-one Leading-One and opr1, under control by the PE Ctr-2, and provides the so selected one to the barrel shifter Barrel Shifter -2.

The operation unit set -2 of the PE-2 includes a leading-one Leading-One, an adder ADD and a rounding detection unit Round, used exclusively for executing the floating decimal point add/ subtract instruction.

The leading-one Leading-One retrieves the bit string of the operand opr0 from the MSB side and calculates the distance from the MSB to the first appearing 1, and provides the so calculated distance to the adder Add and to the selector mux14.

The adder Add sums a partial bit stream of opr1 to the retrieved result of the leading-one Leading-One to supply the resulting sum to the formatting unit (form).

The rounding detection unit Round decides whether or not the result of the operation of the barrel shifter Barrel Shifter -2 is in need of rounding, and provides the so verified result to the selector mux2-1.

The RAM-2 of the PE-2 includes memory devices, not shown, and writes data from the set of general purpose registers RegFiles-2 and from the EMEM data transfer network in the memory devices under control by the PE Ctr-2. Or, the RAM-2 provides data read from the memory devices to the selector mux15 and to the EMEM data transfer network 40.

The selector mux15 selects the read result of the selector mux2-1 or the read result from the RAM-2, under control by the PE Ctr-2, and provides the so selected result to the formatting unit (form).

The formatting unit (form) selects the result of selection by the selector mux 15 as a mantissa part, while selecting the result of the operation of the adder Add as an exponent part and selecting the result of the sign as a sign part, under control by the PE Ctr-2. The formatting unit sets the format to the form of single precision of IEEE754, and provides the result to the general purpose register set RegFiles-2.

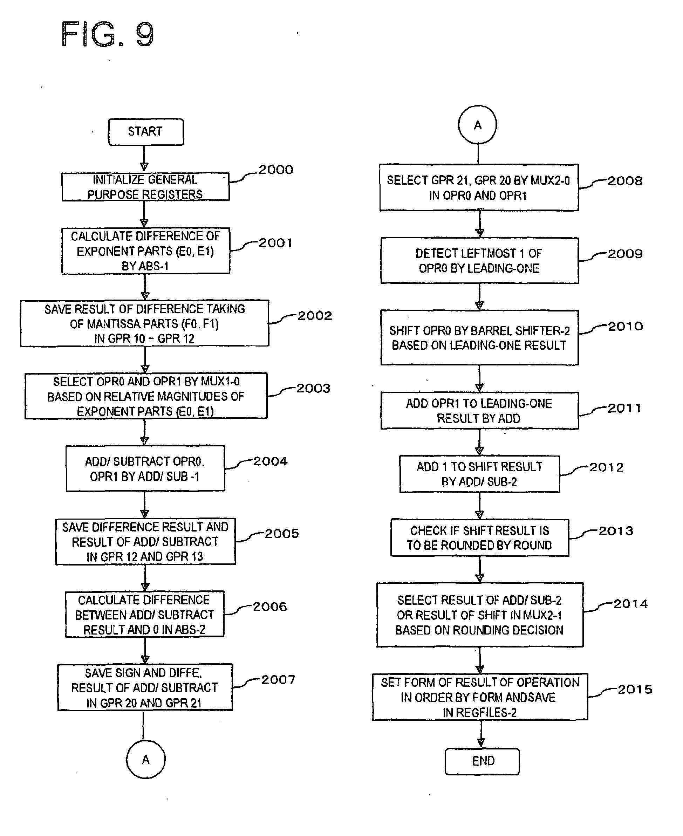

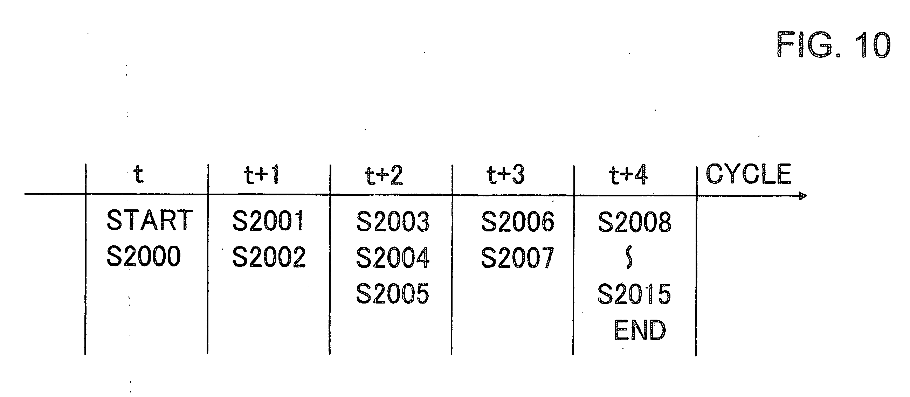

Fig.9 is a flowchart showing the operation of the reconfigurable SIMD processor of the exemplary embodiment 2, shown in Figs.1, 7 and 8, in which, when one group is formed by a plurality of PEs, such group executes the multi-cycle floating decimal point add/ subtract instruction. Fig.10 is a timing chart showing the timing of execution of respective steps of Fig.9. In the following, the reconfigurable SIMD processing method for executing a multi-cycle floating decimal point add/ subtract instruction is explained in detail with reference to Figs.9 and 10.

First, in the PE-2, the GPR 20 is initialized to the operand 0 (fopr0) of the floating decimal point, while the GPR. 21 is initialized by the operand 1 (forp1) of the floating decimal point (step 2000). The step 2000 is executed at a first cycle t, as shown in Fig.10.

In the step 2000, the GPR 20 and GPR 21 are registers to be initialized. However, the present invention is not limited to this configuration and may have an optional register as an object for initialization. The operands of the floating decimal points may be specified by immediate values or by a combination of two or more registers.

The floating decimal point operands (fopr0, fopr1), stored in the GPR 20 and in the GPR 21, are supplied via the inter-PE operation unit connection path 50 to PE-1. In the PE-1, the exponent parts (E0, E1) of the operands (fopr0, fopr1) are selected by the selectors mux04 and mux05, and the difference between the exponent parts E0 and E1 is calculated by the differentiator Abs-1 (step 2001).

The selector mux00 in the PE-1 selects one of a mantissa part (F0) of fopr0 and a bit string corresponding to the F0 to the MSB side of which is added 1, and updates the GPR 10 by the so selected one (step 2002).

The selector mux01 selects one of a mantissa part (F1) of fopr1 and a bit string corresponding to the mantissa part (F1) of fopr1, to the MSB side of which is added 1, and updates the GPR 11 by the so selected bit string (step 2002).

The selector mux02 selects lower 8 bits of the result of the operation of the differentiator Abs-1, and updates the lower 8 bits of the GPR 12 by the result of the selection (step 2002).

In the step 2002, the relative magnitudes of the exponent parts (E0, E1), and the sign parts (S0, S1) of fopr0 and fopr1, are saved in a register, not shown, newly provided in a PE Ctr-1.

The steps 2001 and 2002 are executed by the second cycle t+1, as shown in Fig.10.

If the relative magnitudes of the exponent parts (E0, E1), saved in the PE Ctr-1, are such that

$$E0 > E1$$

the GRP 10 and the GRP 11 are selected as opr0 and opr1, respectively, by the selector mux1-0, under control by the selector PE Ctr-1 (step 2003).

If E0 < E1, the GRP 11 and the GRP 10 are selected as opr0 and opr1, respectively, by the selector mux1-0, under control by the PE Ctr-1. The result of the selection is supplied to the general purpose register set-1 (step 2003).

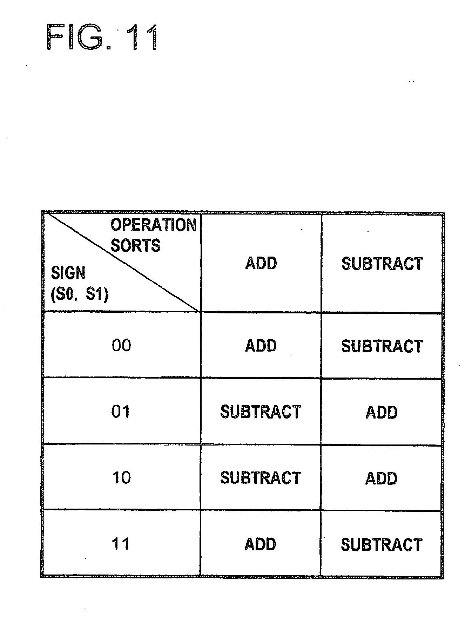

Referring to Fig.11, the adder/subtractor Add/ Sub-1 PE Ctr-1 is controlled by the PE Ctr-1 so as to perform addition or subtraction on opr0 and opr1, based on the sign parts (S0, S1) saved in the PE Ctr-1 and on the information as to which of addition and subtraction is to be performed by the adder/subtractor Add/ Sub-1.

The selector mux02 selects, under control by the PE Ctr-1, the result of the difference of the exponent part saved in the lower eight bits of the GPR 12, and updates the upper eight bits of the GPR 12 by the result of the selection (step 2005).

Also, in the step 2005, the PE Ctr-1 decides on the sign of the result of the operations of the floating decimal point addition/ subtraction, based on whether the result of the operation of the adder/subtractor Add/ Sub-1 is positive or negative and on the sign parts (S0, S1) saved in the PE Ctr-1. The PE Ctr-1 causes the sign to be stored in a register, not shown, newly provided in the PE Ctr-1.

In addition, the selector muxl-1-selects the result of the operation of the adder/subtractor Add/ Sub-1, under control by the PE Ctr-1, and sends the result of the selection to the selector mux0-7.

The selector mux0-7 selects the result of the selection of the selector mux1-1, under control by the PE Ctr-1, and updates the GPR 13 by the result of the selection (step 2005).

The steps 2003 to 2005 are executed at the third cycle t+2, as shown in Fig.10.

The PE-1 provides

a difference tmpe of the exponent parts stored in the upper eight bits of the GPR 12,

a result of addition/ subtraction of the mantissa parts stored in the GPR 13, and

a sign of the result of the operation (sign)

to the PE-2 via the inter-PE operation unit connection path 50

In addition, the selector mux12 selects tmpf, the selector mux13 selects 0 and the differentiator Abs- 2 calculates the difference between the results of the selection (step 2006).

In the PE-2, the selector mux08 selects, under control by the PE CTr-2, a bit line corresponding to a sign result (sign) added to the upper bit side of the intermediary result of the mantissa part tmpe provided by the PE-1. The selector mux09 also selects the result of the operation of the differentiator Abs- 2. The respective results of the selection are stored in the GPR 20 and in the GPR 21 (step 2007).

The steps 2006 and 2007 are executed at the fourth cycle t+3, as shown in Fig.10.

Under control by the PE Ctr-2, the selector mux2-0 selects the GPR 21 as opr0, while selecting the GPR 20 as opr1 (step 2008).

The Leading-One then scans the bit string of opr0 from the MSB to the LSB side thereof to count the number of bits encountered during the scanning from the MSB to the first occurrence of 1 (step 2009).

Under control by the PE Ctr-2, the selector mux14 selects the result of the operations of the Leading-One, while the Barrel Shifter- 2 shifts bits of opr0 based on the result of selection (step 2010).

The adder Add adds the intermediary result of the exponent part tmpe and the result of the operation of the Leading-One together (step 2011).

Under control by the PE Ctr-2, the selector mux10 selects the result of the operation of the barrel shifter Barrel Shifter- 2, while the selector mux11 selects 1. The adder/subtractor Add/ Sub-2 adds these results of selection together (2012).

When the result of the operation of the barrel shifter Barrel Shifter- 2 is to be accommodated within a bit width of the mantissa part of the single precision, the rounding detection unit Round decides whether or not rounding is needed (step 2013).

If, as a result of the result of decision on the rounding, the rounding is found to be necessary, the selector mux2-1 selects the result of the operation of the adder/subtracter Add/ Sub- 2. If conversely the rounding has been found to be unnecessary, the selector mux2-1 selects the result of the operation of the barrel shifter Barrel Shifter- 2 (step 2014).

Under control by the PE Ctr-2, the selector mux15 selects the result of selection by the selector mux2-1. The formatting unit (form) takes the sign part of opr1 into the sign part of the result of the operation, while taking the result of the operation of the adder Add into the exponent part of the result of the operation. The formatting unit (form) selects the lower 23 bits of the result of the selection of the selector mux25 as the mantissa part of the result of the operation. The formatting unit also sets the format to the form of single precision of IEEE754, and saves the result in an optional register of the general purpose register set RegFiles-2 (step 2015).

The steps 2008 to 2015 are executed at the fifth cycle t+4, as shown in Fig.10, to terminate the execution of the multi-cycle floating decimal point add/ subtract instruction.

Here, the multi-cycle floating decimal point add/ subtract instruction is divided into a plurality of pipelines, so that the latency and the throughput will come to a close in four cycles and in one cycle, respectively. It is however also possible to select the configurations for the latency and the throughput so as to be optimum and to freely change the number of PEs making up one group as well as the configuration within each PE in keeping with the so selected configurations for the latency and the throughput.

With the present exemplary embodiment, described above, it is possible to add

a plurality of selectors (mux00 ~ mux06 and mux08 ~ mux14);
a Leading-One:

an adder Add; and
a rounding detection unit Round
to the previous exemplary embodiment to expand the control circuit of each of PE Ctr-1 and the PE Ctr-2 to implement a multi-cycle floating decimal point add/ subtract instruction.

Since it is unnecessary to newly add an adder/subtractor, a barrel shifter or a register of a larger circuit size, it is sufficient to add only a minor amount of circuits in comparison with the case of newly adding a floating decimal point add/ subtract circuit.

If a multi-cycle floating decimal point add/ subtract instruction is to be implemented by the combination of instructions executable by a single PEs, bit operations that express the floating decimal point by an integer system is preferentially used. Hence, about 4000 cycles are needed to add or subtract two single precision operands.

In contrast, with the present exemplary embodiment, even though the number of the floating decimal point add/ subtract instructions that may be executed simultaneously is halved, each instruction may be executed in four cycles. It is thus possible to improve the performance by a factor of about 500 in comparison with the case of implementing the instruction with a single PE.

<Exemplary Embodiment 3>

In an exemplary embodiment 3, a reconfigurable SIMD processor in which, when one group is composed of a plurality of PEs, such group executes a multi-cycle floating point multiply instruction, is described in detail. The present invention is not to be limited to the configuration of the exemplary embodiment 3. Here, the exemplary embodiment 3 is described using the IEEE754 single precision as the form for representing the floating decimal point numbers, as in the exemplary embodiment 2. Although the IEEE754 single precision is used here as the form for representing the floating decimal 1 point numbers, it is of course possible to use other forms of expression.

The global configuration of the SIMD processor of the present exemplary embodiment is similar to that of the exemplary embodiment 1 shown in Fig. 1. The description of Fig. 1. here is dispensed with.

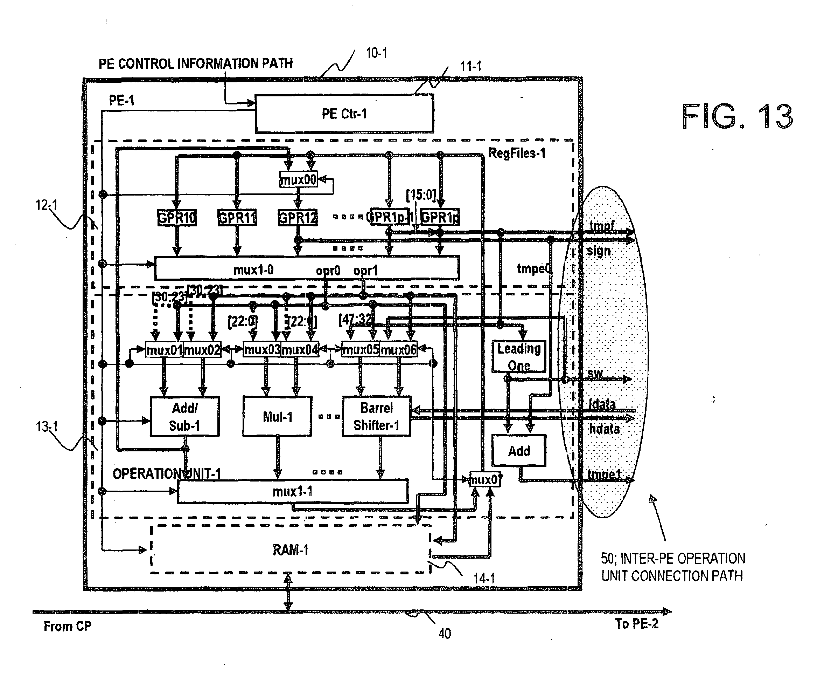

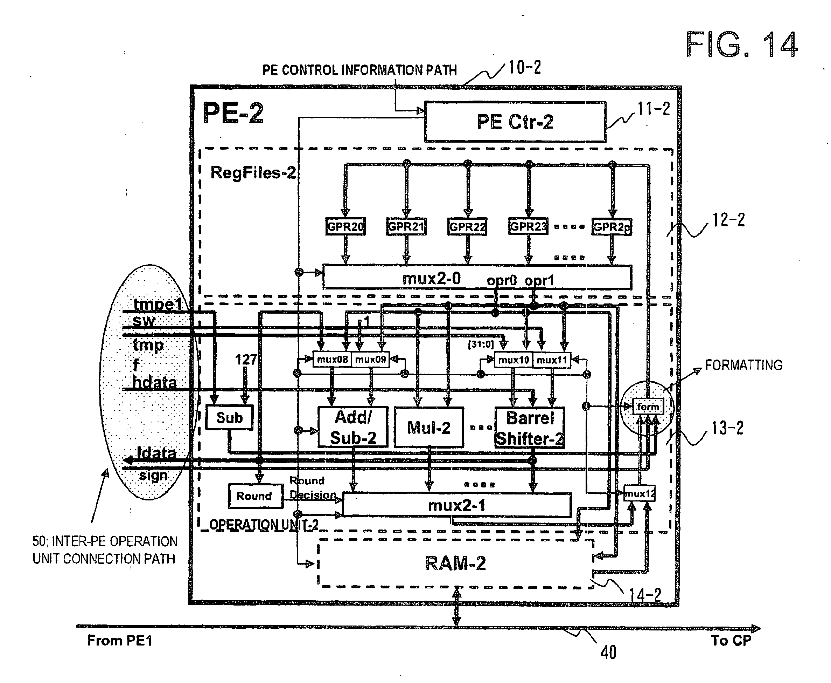

Fig.13 and 14 show examples of the configurations of PE-1 and PE-2 in the present exemplary embodiment, respectively. The present exemplary embodiment is directed to a case in which, when one group executes a multi-cycle floating decimal point multiply instruction, such group includes two PEs. The present invention is not limited to this configuration such that one group may be made up of three or more PEs. The role sharing configuration between the PE-1 and the PE-2 as now described is also merely illustrative and the present invention is not to be limited to this configuration.

Referring to Figs.13 and 14, the PE-1 receives lower order data 1data of the intermediary shift result from the PE-2 via the inter-PE operation unit connection path 50. Also, the PE-1 provides the PE-2 with upper data hdata of the intermediary result of the mantissa part tmpf, intermediary sign result (sign), the shift bit width (sw) and with the intermediary result of the exponent part tmpe1. In the following, the PE-1 is explained with reference to Fig.13.

The general purpose register set RegFiles -1 of the PE-1 includes a plurality of registers GPR10 ~ GPR 1P. The GPR. 12 is updated by the result of selection by the selector mux00, while the GPR10, GPR1-1 and the GPR13 ~ GPR1p are updated by the result of selection of the selector mux07.

It is observed that the GPR 1p-1 and GPR 1p are handled as special registers that store upper half bits and lower half bits of the result of multiplication. Hence, separate dedicated selectors are used for GPR 1p-1 and GPR 1p. This is not relevant to the subject-matter of the present invention and hence is not shown in Fig.13. The outputs of the registers are selected by the selector mux1-0, controlled by the PE Ctr-1, so as to be supplied as operands (opr0, opr1) to the operation unit set -1 and to the RAM -1.

The selector mux00 selects, under control by the PE Ctr-1, one of the results of the operation by the adder/subtracter Add/ Sub-1 and the result of selection by the selector mux07, under control by the PE Ctr-1, to supply the selected one to the GPR 12.

The operation unit set -1 of the PE-1 includes an adder/subtractor Add/ Sub-1, a multiplier Mul-1 and a barrel shifter Barrel Shifter- 1.

The adder/subtractor Add/ Sub-1 executes an operation on the result of selection by the selector mux01 and the result of selection by the selector mux02, as operands, under control by the PE Ctr-1.

The multiplier Mul-1 executes an operation on the result of selection by the selector mux03 and the result of selection by the selector mux04, as operands, under control by the PE Ctr-1.

The barrel shifter Barrel Shifter- 1 executes an operation on the result of selection by the selector mux05 and the result of selection by the selector mux06, as operands, under control by the PE Ctr-1.

The results of the operation are selected by the selector mux1-1, controlled by the PE Ctr-1, so as to be supplied to the selector mux07.

The selector mux01 selects one of a bit string and opr0, under control by the PE Ctr-1, and provides the selected one to the adder/subtractor Add/ Sub-1. The bit string is composed of an exponent part [30:23] of opr0 of single precision of IEEE754, as lower order bits, and 0s added to its upper order side.

The selector mux02 selects a bit string or opr1, under control by the PE Ctr-1, and provides the result of the selection to then adder/subtractor Add/ Sub-1. The bit string is composed of an exponent part [30:23] of opr1 of single precision of IEEE754, as lower order bits, and 0s added as upper order bits.

The selector mux03 selects one of a bit string and opr0, under control by the PE Ctr-1, and provides the result of the selection to the multiplier Mul-1. The bit string is composed of an exponent part [22:0] of opr0 of single precision of IEEE754, as lower order bits, a 1 as the next upper order bit and 0s as further upper order bits.

The selector mux04 selects one of a bit string and opr1, under control by the PE Ctr-1, and provides the so selected one to the multiplier Mul-1. The bit string is composed of an exponent part [22:0] of opr1 of single precision of IEEE754, as lower order bits, 1 as the next upper order bit and 0s as further upper order bits.

The selector mux05 selects one of a bit string or opr0, under control by the PE Ctr-1, and provides the so selected one to the barrel shifter Barrel Shifter- 1. The bit string is composed of upper order 16 bits of a bit string tmpf and 0s added as upper order bits to the 16 bits. The bit string tmpf is composed of 16 lower order bits of the GRP 1p-1 as higher order bits and 32 bits of the GRP 1p as lower order bits.

The selector mux06 selects one of the result of the operation by the Leading-One and opr1 and provides the so selected one to the barrel shifter Barrel Shifter- 1.

The operation unit set -1 of the PE-1 includes a Leading-One and an adder Add, used only for execution of the floating decimal point add/subtract instruction.

The Leading-One retrieves the bit string of tmpf from its MSB side to calculate a distance sw from the MSB side up to first occurrence of 1. The so calculated distance is supplied to the adder Add, selector mux06 and to the PE-2.

The adder Add sums the intermediary result tmpe0 of the mantissa part, stored in the GPR 12, and the result of retrieval by the Leading-One, to each other, to store the result in the PE-2.

The RAM-1 of the PE-1 includes memory devices, and writes data from the general purpose register set RegFiles-1 and the EMEM data transfer network in the memory devices, under control bv the PE Ctr-1. Data read from the memory devices of the RAM -1 of the PE-1 are provided to the selector mux07 and to the EMEM data transfer network.

The selector mux07 selects one of the results of selection by the selector mux1-1 and the results read from the RAM -1, under control by the PE Ctr-1, and provides the so selected one to the general purpose register set RegFiles-1.

Referring to Fig.14, the PE-2 receives the intermediary result of the mantissa part tmpf, intermediary result tmpe1 of the exponent part, sw and sign result (sign), as the intermediary results of the floating decimal point multiply instruction, and upper data hdata of shift intermediary result, from PE-1, via the inter-PE operation unit connection path 50. The PE-1 then provides lower order data 1data of the intermediary shift result to the PE-1. Referring to Fig.14, the PE-2 will now be described.

The general purpose register set RegFiles-2 of the PE-2 includes a plurality of registers GPR 20 - GPR 2p, and is updated by the result of selection of the formatting unit (form). The register outputs are selected by the selector mux2-0, controlled by the PE Ctr-2, so as to be supplied as operands (opr0, opr1) to the operation unit set -2 and to the RAM -2.

The operation unit set -2 includes an adder/subtractor Add/ Sub-2, a multiplier Mul-1 and a barrel shifter Barrel Shifter -2.

The adder/subtractor Add/ Sub-2 executes an operation on the results of the selection of the selectors mux08 and mux09, as operands, under control by the PE Ctr=2.

The multiplier Mul- 2 executes an operation on opr0 and opr1, as operands, under control by the PE Ctr-2.

The barrel shifter Barrel Shifter -2 executes an operation on the results of the selection of the selectors mux10 and mux11, as operands, under control by the PE Ctr-2.

The result of the operation is selected by the selector mux2-1, controlled by the PE Ctr-2, so as to be supplied to the selector mux12.

The selector mux08 selects one of the result of the operations by the barrel shifter Barrel Shifter -2 and opr0, under control by the PE Ctr-2, and supplies the so selected one to the adder/subtractor Add/ Sub-2.

The selector mux09 selects one of the value 1 and opr1, under control by the PE Ctr-2, and provides the so selected one to the adder/subtractor Add/ Sub-2.

The selector mux10 selects one of the lower 32 bits of tmpf [31:0] and opr0, under control by the PE Ctr-2, and provides the so selected one to the barrel shifter Barrel Shifter -2.

The selector mux 11 selects one of the shift width sw, provided from the PE-1 via the inter-PE operation unit connection path 50, and opr0, under control by the PE Ctr-2, and provides the so selected one to the barrel shifter Barrel Shifter -2.

The operation unit set -2 of the PE-2 includes a subtractor Sub and a rounding detection unit Round, used exclusively for executing the floating decimal point add/ subtract instruction, as constituent elements.

The subtractor Sub subtracts 127 from temp1, and provides the result of subtraction to the formatting unit (form).

The rounding detection unit Round decides whether or not the result of the operations by the barrel shifter Barrel Shifter -2 is in need of rounding, and sends the result verified to the selector mux2-1.

The RAM-2 of PE-2 includes a plurality of memory elements, and writes data from the RegFiles-2 and from the EMEM data transfer network in the memory devices, or sends the data read from the memory devices to the selector mux12 and to the EMEM data transfer network, under control by the PE Ctr-2.

The selector mux12 selects one of the result of selection by the selector mux2-1 and the read result from the RAM-2, under control by the PE Ctr-2, and sends the so selected one to the formatting unit (form).

The formatting unit (form) selects one of the result of selection by the selector mux12, the result of the operation by the subtractor Sub and the result of the sign (sign), supplied from PE-1. The formatting unit sends the selected result to the general purpose register set Reg-Files-2.

The formatting unit (form) selects the result of selection of the selector mux12, as the mantissa part, while selecting the result of the operation of the subtractor Sub as the exponent part and selecting the result of the sign (sign), supplied from the PE-1, as the sign, under control by the PE Ctr-2. The formatting unit also sets the format to the form of single precision of IEEE754, and saves the result in an optional register of the general purpose register set RegFiles-2.

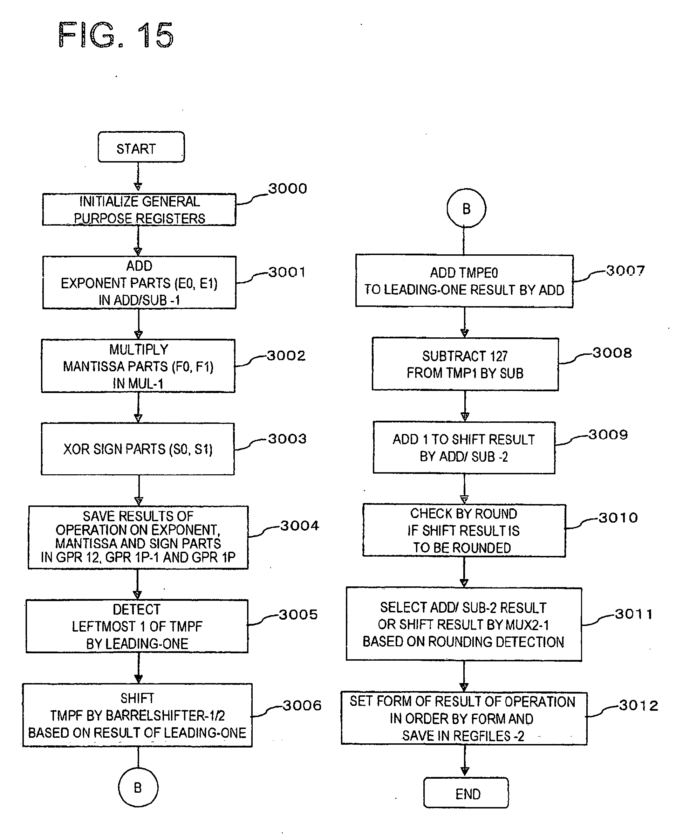

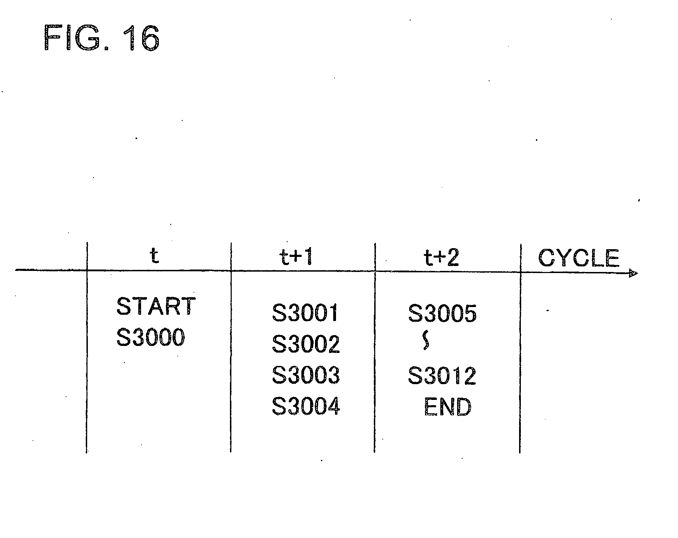

Fig.15 is a flowchart for a reconfigurable SIMD processing method by a reconfigurable SIMD processor of the exemplary embodiment 3 shown in Figs.1, 13 and 14. If, in the SIMD processor, a group includes a plurality of PEs, such group executes a multi-cycle floating decimal point multiply instruction. Fig.16 is a timing chart according to which respective steps of Fig.15 are to be executed. Referring to Figs.15 and 16, the reconfigurable SIMD processor, configured for executing a multi-cycle floating decimal point multiply instruction, is described in detail.

Initially, the PE-1 initializes the GPR 10 and the GPR 11 to the operand 0 (fopr0) and the operand 1 (fopr1) of the floating decimal point, respectively (step 3000). This step 3000 is executed by the first cycle t, as shown in Fig.16.

In the step 3000, the registers to be initialized are GPR 10 and GPR 11. The present invention is not limited to this configuration and any optional registers may be initialized.

The operand of the floating decimal point may be expressed by designation by an immediate value or by the combination of two or more registers.

Then, under control by the PE Ctr-1, the selector mux1-0 selects the GPR 10 and the GPR 11 as opr0 and opr1, respectively. The selectors mux01 and mux02 select the exponent parts (E0, E1) of opr0 and opr1, while the adder/subtractor Add/ Sub-1 adds the exponent parts (step 3001).

Under control by the PE Ctr-1, the selectors mux03 and mux04 select the mantissa parts (F0, F1) of opr0 and opr1, and the multiplier Mul-1 multiplies the mantissa parts by each other (step 3002).

The XOR (Exclusive OR) of the sign parts (S0, S1) of opr0 and opr1 is calculated by a newly provided XOR device, which is not shown in Fig. 13 for simplicity of the drawing (step 3003).

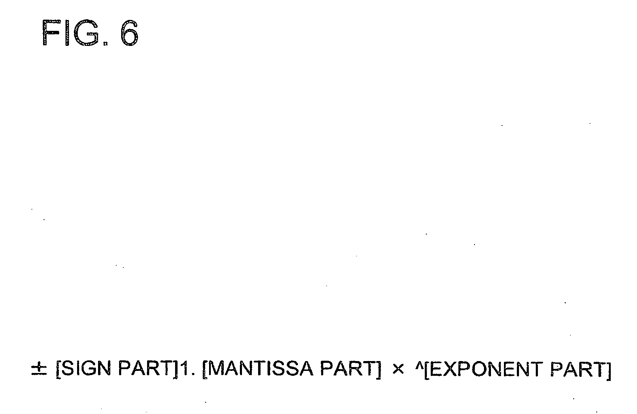

Under control by the PE CTR-1, the selector mux00 selects a bit string, composed of the result of addition of the exponent parts on the upper order side of which is placed the result of the XOR operation. The result of the selection is saved in the GPR 12. The selector mux-1 selects the result of the operation of the multiplier Mul-1. The lower order half of the result of the operation is saved in the GPR 10, while its upper half is saved in the GPR Ip-1 (step 3004). Referring to Fig.6, the steps 3001 to 3004 are executed at the second cycle t+1.

A bit string tmpf, composed of the bit string saved in the GPR 1p, to an upper order side of which is added a lower half of the bit string GPR 1p-1, is supplied as input to the Leading-One. The bit string tmpf is scanned from its MSB side towards its LSB side, and the number of bits from the MSB to the first occurrence of I is counted (step 3005).

Under control by the PE Ctr-1, the selector mux05 selects upper 16 bits of tmpf, and the selector mux06 selects the result of the operation of the Leading-One.

Under control by the PE Ctr-2, the selector mux10 selects lower 32 bits of tmpf, and the selector mux11 selects the result of the operations sw by the Leading-One supplied via the inter-PE operation unit connection path 50. Under control by the PE Ctr-1/2, shift data is exchanged between the selector mux11 and the barrel shifter Barrel Shifter- 1/2 via the inter-PE operation unit connection path 50 to bit-shift tmpf by sw (step 3006).

The adder Add adds the intermediary result of the exponent parts, stored in the GPR 12, to the result of the operations sw by the Leading-One (step 3007).

The subtractor Sub subtracts 127 from the intermediary result tmpe1 of the exponent parts supplied from the PE-1 via the inter-PE operation unit connection path 50 (step 3008).

Under control by the PE Ctr-2, the selector mux08 selects the result of the operation of the barrel shifter Barrel Shifter- 2, the selector mux09 selects 1 and the adder/subtractor Add/ Sub-2 sums the results of the selection together (step 3009).

When the result of the operation of the barrel shifter Barrel Shifter- 2 is to be accommodated within a bit width of the mantissa part of the single precision, the rounding detection unit Round decides whether or not it is necessary to perform the rounding (step 3010).

If, as a result of the result of decision on the rounding, the rounding is found to be necessary, the selector mux2-1 selects the result of the operation of the adder/subtractor Add/Sub- 2. If conversely the rounding has been found to be unnecessary, the selector mux2-1 selects the result of the operation of the barrel shifter Barrel Shifter- 2 (step 3011).

Under control by the PE Ctr-2, the selector mux12 selects the result of selection by the selector mux2-1. The formatting unit (form) takes the Sign supplied from the PE-1 via the inter-PE operation unit connection path 50 into the sign part of the result of the operation, while taking the result of subtraction of the subtractor Sub into the exponent part of the result of the operation. The formatting unit (form) selects the lower 23 bits of the result of the selection of the selector mux12 as the mantissa part of the result of the operation. The formatting unit also sets the format to the form of single precision of IEEE754, and saves the result in an optional register of the general purpose register set RegFiles-2 (step 3012).

The steps 3005 to 3012 are executed at the third cycle t+2, as shown in Fig.16, to terminate the execution of the multi-cycle floating decimal point multiply instruction.

Here, the multi-cycle floating decimal point multiply instruction is divided into a plurality of pipelines, so that the latency and the throughput will come to a close in two cyles and in one cycle, respectively. It is however also possible to select optimum configurations for the latency and the throughput and to freely change the number of PEs making up one group and the configuration within each PE in keeping with the so selected configurations for the latency and the throughput. A variety of other configurations may also be used within the technical scope of the present invention.

With the present exemplary embodiment, described above, the multi-cycle floating decimal point multiply instruction may be implemented by adding a plurality of selectors (mux00 ~ mux06 and mux28 ~ mux11), a Leading-One, an adder Add and a rounding detection unit Round, and by expanding the control circuitry for the PE Ctr-1 and PE Ctr-2.

Since it is unnecessary to newly add an adder/subtractor, a multiplier, a barrel shifter or a register of larger circuit size, the size of the circuit to be added may be only small in comparison with the case of newly adding a circuit for floating decimal point multiplication.

In addition, since the Leading-One, adder Add or the rounding detection unit Round, used in subsequent processing of the floating decimal point instruction, and those used in the floating decimal point add/ subtract instruction, may be used in common. Hence, in case of executing a plurality of floating decimal point instructions, it is possible to further suppress the circuit from increasing in size.

If a multi-cycle floating decimal point add/ subtract instruction is to be implemented by the combination of instructions executable by a single PE, bit operations that express the floating decimal point by an integer system is frequently used. Hence, about 2000 cycles are needed to add or subtract two single precision operands. In contrast, with the present exemplary embodiment, even though the number of the floating decimal point add/ subtract instructions that may be executed simultaneously is halved, each instruction may be executed in two cycles, and hence the performance may be improved by a factor of ca. 5000 in comparison with the case of implementing the instruction with a single PE.

<Exemplary Embodiment 4>

In the exemplary embodiment 4, a reconfigurable SIMD processor in which, when one group is composed of a plurality of PEs, such group executes a multi-cycle floating point divide instruction, is described in detail. The present invention is not to be limited to the configuration of the exemplary embodiment 4. The exemplary embodiment 4 uses the IEEE754 single precision as the form for representing the floating decimal point numbers, as in the exemplary embodiments 2 and 3. However, it is of course possible to use other forms for representing the floating decimal point numbers.

Fig.1 is a block diagram showing the configuration of the exemplary embodiment 4 of the present invention. The global configuration of the SIMD processor of the present exemplary embodiment is similar to that of the exemplary embodiments 1 to 3 shown in Fig.1. The description of Fig.1 here is dispensed with.

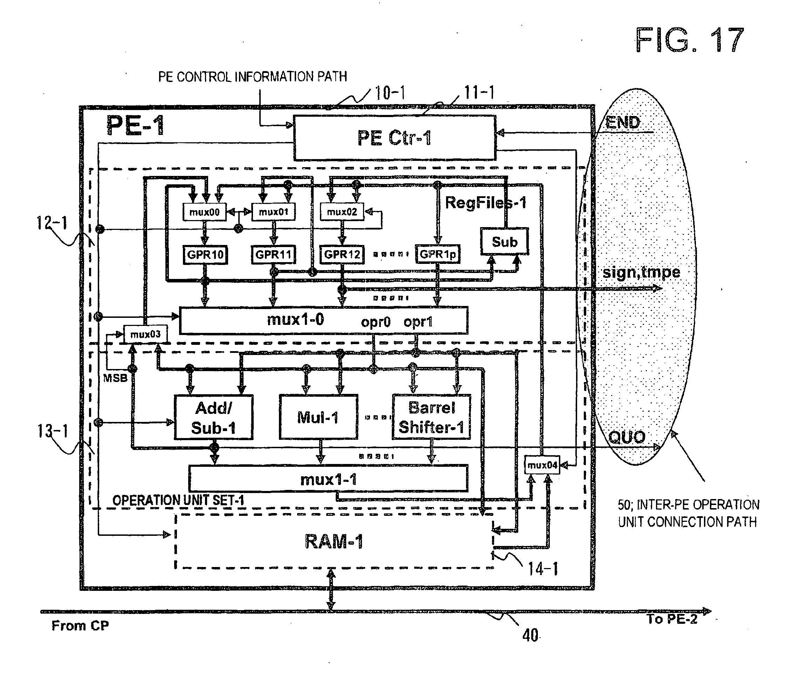

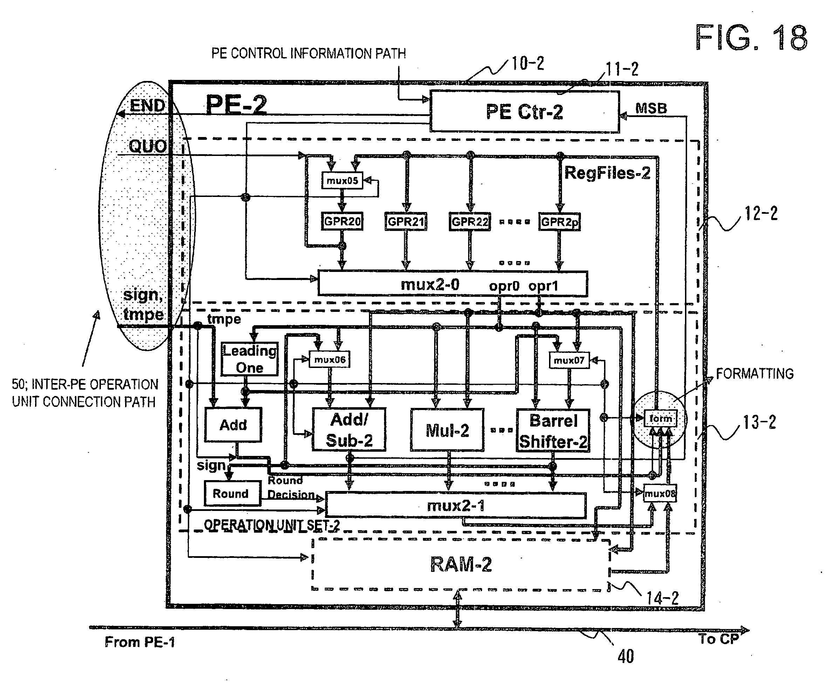

Figs.17 and 18 show examples of the configurations of PE-1 and PE-2 in the present exemplary embodiment.

In the present exemplary embodiment, a case in which, when one group executes a multi-cycle floating decimal point divide instruction, such group includes two PEs, will be described. The present invention is not limited to this configuration only such that one group may be made up of three or more PEs. The role sharing between the PE-1 and the PE-2 is merely illustrative and the present invention is not to be limited to this configuration.

Referring to Figs. 17 and 18, the PE-1 receives an end signal END of the multi-cycle floating decimal point divide instruction from the PE-2 via the inter-PE operation unit connection path 50. The PE-1 then provides a sign (sign) of the result of the operations, an intermediary result of the exponent parts tmpe and a digit of the result of the division QUO to the PE-2. In the following, the detailed configuration of the PE-1 is explained with reference to Fig. 17.

The general purpose register set RegFiles-1 includes a plurality of registers GPR 10 ~ GPR 1p. The GPR 10, GPR 11 and GPR 12 are updated by the results of selection by selectors (mux00, mux01 and mux12), while the GPR 13 ~ GPR 1p are updated by the result of selection by the selector mux04. The outputs of these registers are selected by the selector mux1-0, controlled by the PE Ctr-1, and are supplied as operands (opr0, opr1) to the operation unit set -1 and to the RAM-1.

The selector mux00 selects, under control by the PE Ctr-1, one of a bit string corresponding to GPR 10, an upper bit of the single precision mantissa part [22:0] of which is set to 1 and further upper bits of which are set to 0s, the result of selection of the selector mux03 and the result of selection of the selector mx4. The selector mx00 supplies a selected one to GPR 10.

The selector mux01 selects, under control by the PE Ctr-1, one of a bit string corresponding to GPR 10, an upper bit of the single precision mantissa part [22:0] of which is set to I and further upper bits of which are set to 0s, and the result of selection of the selector mx4. The selector mx00 supplies a selected one to GPR 11.

Under control by the PE Ctr-1, the selector mux02 selects one of the result of subtraction of the subtractor Sub and the result of selection of the selector mux4, and deliver the selected one to the GPR 11.

The general purpose register set RegFiles-1 of the PE-1 includes, as a constituent element, a subtractor Sub used exclusively for executing the floating decimal point divide instruction. The subtractor subtracts the single precision exponent part [30:24] of the GPR 11 from the single precision exponent part [30:24] of the GPR10 to supply the result of the subtraction to the selector mux02.

An XOR (Exclusive OR) element, not shown in Fig. 17 for simplicity of the drawing, takes XOR of the single precision sign part [31] of the GPR 10 and the single precision sign part [31] of the GPR 11. The result of the XOR operation is supplied to the selector mux2.

The operation unit set -1 of the PE-1 includes an adder/subtractor Add/ Sub-1, a multiplier Mul-1 and a barrel shifter Barrel Shifter -1. Under control by the PE Ctr-1, the respective operation units perform operations on the operands (opr0, opr1) supplied from the selector mux1-0. The results of the operations are selected by the selector mux-1, controlled by the PE Ctr-1, so as to be supplied to the selector mux04. It should be observed that the configuration of the operation unit set -1 of PE-1 is merely illustrative and the present invention is not to be limited to this illustrative configuration.

The RAM -1 of the PE-1 is formed by memory devices, and writes data from the general purpose register set RegFiles-1 and from the EMEM data transfer network in the memory devices, under control by the PE Ctr-1. Or, the RAM -1 of the PE-1 provides data read from the memory devices to the selector mux04 and to the EMEM data transfer network.

The selector mux04 selects one of the result of selection by the selector mux1-1 and the read result of the RAM -1, under control by the PE Ctr-1, and sends the selected one to the general purpose register set RegFiles-1.

Referring to Fig.18, the PE-2 receives one digit of the result of division QUO, the intermediary result of the exponent part, as an intermediary result of the floating decimal point multiply instruction, and the sign result (sign) from the PE-1. The PE-2 then sends the floating decimal point division end signal END to the PE-1. Referring to Fig. 18, the configuration of the PE-2 is now described.

The general purpose register set RegFiles-2 of the PE-2 includes a plurality of registers GPR 20 - GPR 2p.

The GPR 20 is updated by the result of selection by the selector mux05, while the GPR 21 - GPR 2p are updated by the result of selection by the formatting unit (form). The GPR outputs are selected by the selector mux2-0, controlled by the PE Ctr-2, so as to be supplied as operands (opr0, opr1) to the general purpose register set RegFiles-2 and to the RAM -2.

Under control by the PE Ctr-2, the selector mux05 selects one of a bit string obtained on removing the MSB from the bit string of the GPR 20 and on adding a digit of the result of division QUO, supplied from the PE-1 via the inter-PE operation unit connection path 50, to the LSB, and the result of selection by the formatting unit (form). The selector mux05 sends the selected one to the GPR 20.

The operation unit set -2 of the PE-2 includes an adder/subtractor Add/ Sub-2, a multiplier Mul-2 and a barrel shifter Barrel Shifter -2.

The adder/subtractor Add/ Sub-2 performs an operation on the result of selection by the selector mux06 and opr1 as operands. The multiplier Mul-2 performs an operation on opr0 and opr1 as operands, while the barrel shifter Barrel Shifter- 2 performs an operation on opr0 and on the result of selection by the selector mux07 as operands. These operations are performed under control by the PE Ctr-2.

The results of the above operations are selected by the selector mux2-1, under control by the PE Ctr-2, and are supplied to the selector mux08.

Under control by the PE Ctr-2, the selector mux06 selects one of the result of the operation of the barrel shifter Barrel Shifter- 2 and opr0, and sends the one selected to the adder/subtractor Add/ Sub-2.

Under control by the PE Ctr-2, the selector mux07 selects one of the result of the operation of the Leading-One and opr1, and sends the one selected to the adder/subtractor Add/ Sub-2.

The operation unit set -2 of the PE-2 includes the Leading-One, an adder Add and a rounding detection unit Round, used exclusively for executing the floating decimal point divide instruction.

The Leading-One retrieves the bit string of opr0 from its MSB side to its LSB side to calculate the distance from the MSB to the first occurrence bit of 1. The Leading-One provides the so calculated distance to the adder Add and to the selector mux07.

The adder Add sums the exponent intermediary result tmpe, supplied from the PE-1 via the inter-PE operation unit connection path 50, to the result of the operations by the Leading-One, and provides the result of the addition to the formatting unit (form).

The rounding detection unit Round decides on whether the result of the operation by the barrel shifter Barrel Shifter- 2 is in need of rounding, and provides the result of the decision to the selector mux2-1.

The RAM -2 of the PE-2 is formed by memory devices, and writes data from the general purpose register set RegFiles-2 and from the EMEM data transfer network in the memory devices, under control by the PE Ctr-2. Or, the RAM -2 of the PE-2 provides data read from the memory devices to the selector mux08 and to the EMEM data transfer network 40.

Under control by the PE Ctr-2, the selector mux08 selects one of the result of the selection by the selector mux2-1 and the read result from the RAM -2, and sends the so selected one to the formatting unit (form).

Under control by the PE Ctr-2, the formatting unit (form) selects one of the result of the selection by the selector mux08, the result of the addition of the Adder Add and the sign result (sign), provided by the PE-1. The formatting unit (form) provides the result of the selection to the general purpose register set RegFiles-2.

Under control by the PE Ctr-2, the formatting unit (form) selects the result of the selection of the selector mux08 as the mantissa part, while selecting the result of addition of the adder Add as an exponent part and selecting the result of the sign (sign) as the sign part. The formatting unit (form) also sets the format to the form of single precision of IEEE754, and saves the result in an optional register of the general purpose register set RegFiles-2.

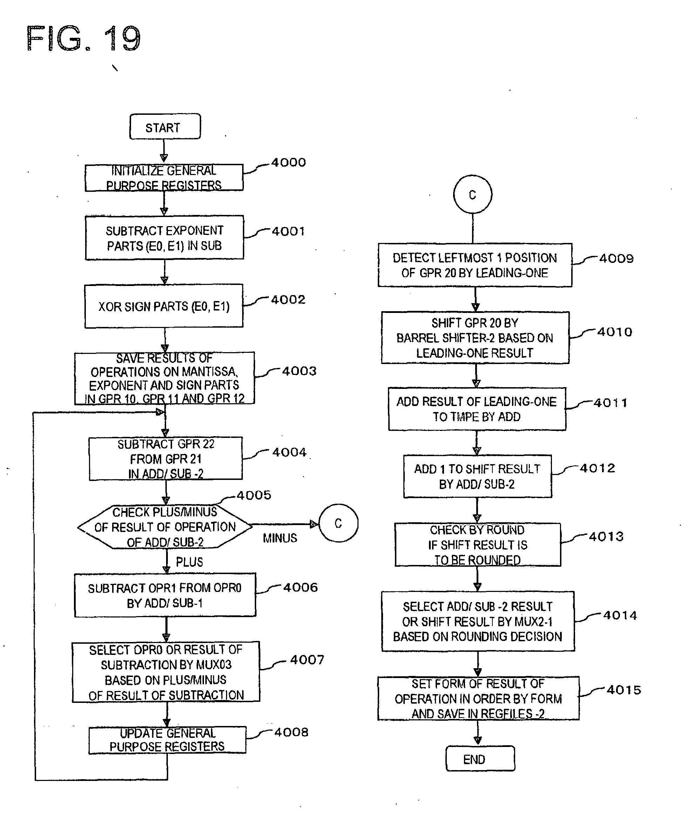

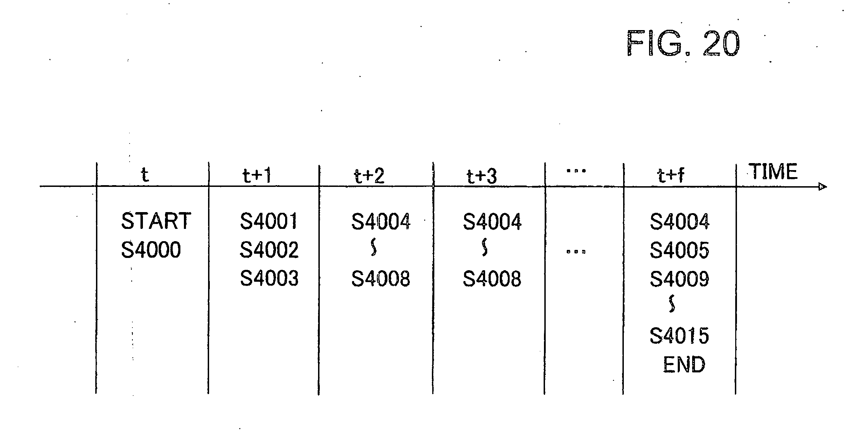

Fig.19 is a flowchart for illustrating the operation of a reconfigurable SIMD processor of the exemplary embodiment shown in Figs. 17 and 18, in which, when one group is formed by a plurality of PEs, such group performs the multi-cycle floating decimal point divide instruction. Fig.20 is a timing chart showing the timing of execution of the respective steps. Referring to Figs.19 and 20, the reconfigurable SIMD processor that performs the multi-cycle floating decimal point divide instruction is now explained.

First, the PE-1 initializes the GPR 10 to the operand 0 of the floating decimal point (fopr0), while initializing the GPR 11 to the operand 1 of the floating decimal point (fopr1). The PE-2 initializes the GPR 21 to the number of cycles needed for division of the GPR 21, while initializing the GPR 22 to 1 (step 4000).

Here, the registers to be initialized are GPR10, GPR11, GPR21 and GPR22. The present invention is not to be limited to this configuration and the registers to be initialized may be any optional registers.

A step 4000 is executed at the first cycle t, as shown in Fig.20.

The subtractor Sub subtracts the exponent part (E1) of the GPR 11 from the exponent part (E0) of the GPR 10 (step 4001).

An XOR (Exclusive OR) element, not shown in Fig.17 for simplicity of the drawing, takes XOR of the sign part (SO) of the GPR 10 and the sign part [S1] of the GPR 11 (step 4002).

Under control by the PE Ctr-1,
the selector mux00 of the PE-1 selects one of the mantissa part (F0) and a bit string corresponding to the mantissa part (F0) to the MSB side of which is added 1, with 0s being combined in an upper side of this bit 1, to update the GPR 10.

The selector mux01 selects one of the mantissa part (F1) and a bit string corresponding to the mantissa part (F1) to the MSB side of which is added 1, with 0s being combined in an upper side of this bit 1, to update the GPR 11.

The selector mux2 selects a bit string corresponding to the result of subtraction of the exponent part, to the MSB side of which is added the result of XOR of the sign parts, to update the GPR 12 (step 4003).

Referring to Fig.20, the steps 4001 to 4003 are executed by the second cycle t+1. Under control by the PE Ctr-2 of PE-2, the selector mux2-0 selects the GPR 21 and the GPR 22 as operands (opr0, opr1), respectively. The adder/subtractor Add/ Sub-1 then subtracts opr1 from opr0 by the adder/subtractor Add/ Sub-2 (step 4004). Here, the value 1 of opr1 is provided as a register value (GPR 22). This value does not necessarily have to be a register value and may also be provided as immediate values or other means.

In case the result of the operation is positive (plus branching of step 4005), the selector mux1-0 of the PE-1 selects the GPR 10 and the GPR 11 as operands for the operation, under control by PE Ctr2. The adder/subtractor Add/ Sub-1 subtracts opr1 from opr0 (step 4006).

In case the result of the subtraction is positive, the selector mux03 selects a bit string corresponding to the result of the subtraction from which the MSB is removed and to the LSB of which is added 0 (step 4007).

Then, in the PE-1, the selector mux00 selects the result of the selection of the selector mux03 to update the GPR 10. The selector mux01 selects the value of the GPR 11 to update GPR 11, while the selector mux02 selects the result of the GPR 12 to update GPR 12 (step 4008). These selection operations are performed under control by the PE Ctr-1.

On the other hand, in the PE-2, the selector mux2-1 selects the result of the operations of the adder/subtractor Add/ Sub-2, while the selector mux08 selects the result of selection of the selector mux2-1. The formatting unit (form) selects the result of the selection and updates the GPR 21 by the result of the selection. The selector mux05 selects a bit string corresponding to the value of the GPR 20 which has been got rid of the MSB and to the LSB of which is added one digit QUO of the result of the division provided by the PE-1 via the inter-PE operation unit connection path 50.The GPR 20 is updated with the bit string in question (step 4008). These operations are performed under control by the PE Ctr-1.

Referring to Fig.20, the steps 4004 to 4008 are executed at the same cycle. In case the result of the operation of the adder/subtractor Add/ Sub-2 is positive, the operations are reiterated a plurality of cycles.

In case the result of the operation is negative (C of the negative branch destination of step 4005), the selector mux2-0 of the PE-2 selects the GPR 20 and the GPR 22 as operands (opr20 and opr22) by the selector mux2-0, under control by the PE Ctr-2, at the next cycle; and

opr0 is supplied to the Leading-One, and a bit string is scanned from the MSB side to the LSB side of the bit string of opr0. The number of bits from the MSB to the first occurrence of 1 is counted (step 4009).

Then, under control by the PE Ctr-2, the selector mux07 selects the result of the operations of the Leading-One, and the barrel shifter Barrel Shifter- 2 bit-shifts the opr0 based on the result of the selection (step 4010).

The adder Add sums the result of the operation of the Leading-One to the intermediary result of the exponent part provided from the PE-1 via the inter-PE operation unit connection path 50 (step 4011).

The selector mux06 selects the result of the operation of the barrel shifter Barrel Shifter- 2, while the adder/subtractor Add/ Sub-2 sums the result of the selection by the selector mux06 to opr1, under control by the PE Ctr-2 (step 4012).

When the result of the operation of the barrel shifter Barrel Shifter- 2 is to be accommodated within a bit width of the mantissa part of the single precision, the rounding detection unit Round checks to see whether or not it is necessary to perform the rounding (step 4013).

If, as a result of the result of decision on the rounding, the rounding is found to be necessary, the selector mux2-1 selects the result of the operation of the adder/subtractor Add/Sub- 2. If conversely the rounding has been found to be unnecessary, the selector mux2-1 selects the result of the operation of the barrel shifter Barrel Shifter- 2 (step 4014).

Under control by the PE Ctr-2, the selector mux08 selects the result of selection by the selector mux2-1. The formatting unit (form) takes the result of the sign (sign) supplied from the PE-1 via the inter-PE operation unit connection path 50 into the sign part of the result of the operation, while taking the result of the operation of the adder Add into the exponent part of the result of the operation. The formatting unit (form) selects the lower 23 bits of the result of the selection of the selector mux08 as the mantissa part of the result of the operation. The formatting unit also sets the format to the form of single precision of IEEE754, and saves the result in an optional register of the general purpose register set RegFiles-2 (step 4015).

Referring to Fig.20, the steps 4004, 4005 and 4009 ~4015 are executed at the same cycle, in case the result of the operation of the adder/subtractor Add/ Sub-1 is negative, to terminate execution of the multi-cycle floating decimal point divide instruction.

Here, the multi-cycle floating decimal point multiply instruction is divided into a plurality of pipelines, and one digit of the result of the division is calculated from cycle to cycle. Hence, the latency is equal to the number of digits of division. It is however possible to select the optimum configuration of the latency and the number of digits of the result of division that is to be calculated following the cycle, depending on the application as the subject. The number of the PEs making up one group and the configuration within each PE may freely be changed in keeping therewith.

With the present exemplary embodiment, described above, the multi-cycle floating decimal point divide instruction may be implemented by supplementing the selectors (mux00 ~ mux03, mux05 ~ mux07), Leading-One, adder Add, subtractor Sub and the rounding detection unit Round, and by expanding the control circuits for the PE Ctr-1 and PE Ctr-2.

Since it is unnecessary to newly add an adder/subtractor, a multiplier, a barrel shifter or a register of larger circuit size, the circuit to be added may be only small in comparison with the case of newly adding the circuit for floating decimal point division.

In addition, since the Leading-One, adder Add or the rounding detection unit Round, used in subsequent processing of the floating decimal point instruction, and those used in the floating decimal point add/ subtract instruction, may be used in common. Hence, in case of executing a plurality of floating decimal point instructions, the circuit may further be suppressed from increasing in size.

In case a multi-cycle floating decimal point divide instruction is executed by the combination of instructions which the single PE is able to execute, approximately 30000 cycles, for example, are needed to divide two single precision operands. It is because bit operations are preferentially used to express the floating decimal point in an integer form.

With the present exemplary embodiment, the number of instructions of the floating decimal point divide instruction that may be executed simultaneously is halved. However, an instruction may be calculated in approximately 30 cycles. Hence, the performance may be improved by a factor of about 500 in comparison with the case of implementing the instruction by the single PE.

With the exemplary embodiment of the present invention, the combination of the operation units and the general-purpose registers of the multiple PEs is reconfigured and different roles are afforded to the respective PEs. It is thus possible to flexibly deal with subjects for processing of different characteristics and to improve the global performance of the SIMD processor. In addition, since the operation units and the general purpose registers, owned by the individual PEs, are used, it is possible to reduce the amount of additional resources that may be needed.

INDUSTRIAL APPLICABILITY

The present invention may be applied to a reconfigurable SIMD processor that may flexibly deal with subjects for processing differing in the degree of parallelism or in the instructions optimum for processing without the necessity of significantly increasing the circuit size.

The particular exemplary embodiments or examples may be modified or adjusted within the gamut of the entire disclosure of the present invention, inclusive of claims, based on the fundamental technical concept of the invention. Further, variegated combinations or selection of elements disclosed herein may be made within the framework of the claims.

**Claims**

1. A SIMD processor, comprising
   a plurality of processing elements (PEs) (10-1, 10-2) adapted to perfom operations as one group, wherein the processing elements are connected over a bidirectional inter-PE operation unit connection path (50), wherein the group is composed of a plurality of processing elements for executing a multi-cycle instruction being more complex than an instruction executable by a single processing element; and
   a control processor (20) that generates an instruction and control information for supply to the processing elements (10-1, 10-2),
   the processing elements (10-1, 10-2), which constitute the group for executing a multi-cycle instruction, using operation units and general purpose registers thereof to function as a parallel operation processor, wherein in case the instruction executed by the one group of the PEs (10-1, 10-2) is a multi-cycle integer divide instruction,
   a first PE in the one group operates as a counter that counts the number of cycles of the multi-cycle integer divide instruction, and
   a second PE in the one group, responsive to the counter, subtracts a divisor from a dividend of the multi-cycle integer divide instruction, a number of times equal to the number of cycles.

2. The SIMD processor according to claim 1, wherein the first PE includes:

   an adder/subtractor (Add/Sub-1); and
   a general purpose register (GPR 10), and wherein
   in executing the multi-cycle integer divide instruction, the first PE (10-1) stores a cycle count value in the general purpose register of the first PE and updates the count value by the adder/subtractor.

3. The SIMD processor according to claim 1, wherein the first PE includes:

   an adder/subtractor (Add/Sub-1); and
   a general purpose register (GPR 10), wherein, in executing the multi-cycle integer divide instruction, the second PE (10-2) stores a divisor, a dividend and an intermediary result of division in the general purpose register,
   the adder/subtractor (Add/Sub-1) subtracting the dividend from the divisor and storing the result of the division in the general purpose register as the intermediary result of division.

**4.** A SIMD processor, comprising a plurality of processing elements (PEs) (10-1, 10-2) adapted to perfom operations as one group, wherein the processing elements are connected over a bidirectional inter-PE operation unit connection path (50), wherein the group is more complex than an instruction executable by a single processing element; and
a control processor (20) that generates an instruction and control information for supply to the processing elements,
the processing elements (10-1, 10-2), which constitute one group for executing a multi-cycle instruction, using operation units and general purpose registers thereof to function as a parallel operation processor, wherein in case the instruction executed by the one group is a multi-cycle floating decimal point add/ subtract instruction,
a first PE (10-1) in the one group performs addition/ subtraction on floating decimal point operands, and
a second PE (10-2) in the one group performs a processing of normalizing the result of the addition/ subtraction.

**5.** The SIMD processor according to claim 4, wherein the first PE includes:

an adder/subtractor (Add/Sub-1);
a differentiator (Abs-1);
a barrel shifter; and
a general purpose register (GPR 10), and wherein
in executing the multi-cycle floating decimal point add/ subtract instruction,
the differentiator and the barrel shifter effect the decimal point position registration in the first PE,
the adder/subtractor adds/ subtracts the result of the decimal point position registration, and
the general purpose register is used as a site of temporary storage of the result of the decimal point position registration and the result of the addition/ subtraction.

**6.** The SIMD processor according to claim 4, wherein the second PE includes:

an adder/subtractor (Add/Sub-2);
a differentiator (Abs-2);
a barrel shifter;
a general purpose register (GPR 20); and
a normalizing controller, and wherein,
in executing the multi-cycle floating decimal point add/ subtract instruction, in the second PE,
the adder/subtractor, the differentiator and the barrel shifter normalize the result of addition/ subtraction of the first PE, under control by the normalizing controller, and
the general purpose register is used as a site of temporary storage of an intermediary result of the normalisation.

**7.** A SIMD processor, comprising a plurality of processing elements (PEs) (10-1, 10-2) adapted to perfom operations as one group, wherein the processing elements are connected over a bidirectional inter-PE operation unit connection path (50), wherein the group is composed of a plurality of processing elements for executing a multi-cycle instruction being more complex than an instruction executable by a single processing element; and
a control processor (20) that generates an instruction and control information for supply to the processing elements,
the processing elements (10-1, 10-2), which constitute one group for executing
a multi-cycle instruction, using operation units and general purpose registers thereof to function as a parallel operation processor, wherein in case the instruction executed by the one group is a multi-cycle floating decimal point multiply instruction,
a first PE (10-1) in the one group executes processing of multiplication of two floating decimal point operands and part of normalization of the result of multiplication, and
a second PE (10-2) in the group operates in cooperation with the first PE to normalize the result of the multiplication.

**8.** The SIMD processor according to claim 7, wherein the first PE includes:

a multiplier;
a barrel shifter;
a leading-one circuit; and
a general purpose register, wherein,
in executing the multi-cycle floating decimal point multiply instruction,
the multiplier in the first PE multiplies the mantissa parts of operands,
the barrel shifter effects part of normalization of the result of the multiplication, and
the general purpose register is used as a site of temporary storage of the result of the multiplication and an intermediary result of the normalization.

**9.** The SIMD processor according to claim 7, wherein the first PE includes:

an adder/subtractor;
a barrel shifter;
a general purpose register; and
a normalization controller, and wherein

in executing the multi-cycle floating decimal point multiply instruction,
in the first PE, the adder/subtractor, the barrel shifter and the barrel shifter normalize the result of the multiplication, under control by the normalization controller, and
the general-purpose register is used as a site of temporary storage of an intermediary result of the normalization.

10. A SIMD processor, comprising a plurality of processing elements (PEs) (10-1, 10-2) adapted to perfom operations as one group, wherein the processing elements are connected oyer a bidirectional inter-PE operation unit connection path (50), wherein the group is composed of a plurality of processing elements for executing a multi-cycle instruction being more complex than an instruction executable by a single processing element; and
a control processor (20) that generates an instruction and control information for supply to the processing elements,
the processing elements (10-1, 10-2), which constitute one group for executing
a multi-cycle instruction, using operation units and general purpose registers thereof to function as a parallel operation processor, wherein in case the instruction executed by the one group is a multi-cycle floating decimal point divide instruction,
a first PE in the one group executes division of two floating decimal point operands, and wherein
a second PE in the one group counts the number of cycles of execution of the division and normalizes the result of the division.

11. The SIMD processor according to claim 10, wherein the first PE includes:

an adder/subtractor; and
a general purpose register, and wherein
in executing the multi-cycle floating decimal point divide instruction,
in the first PE, a divisor, a dividend and an intermediary result of division are stored in the general purpose register, and
the dividend is subtracted by the adder/subtractor from the divisor to store the result of subtraction in the intermediary result of division.

12. The SIMD processor according to claim 10, wherein the second PE includes:

an adder/subtractor;
a barrel shifter;
a general purpose register; and
a normalization controller, and wherein
in executing the multi-cycle floating decimal point divide instruction,

in the second PE,
the cycle count value is stored in the general purpose register,
the counter value is updated by the adder/subtractor,
the result of division of the first PE is normalized by the adder and the barrel shifter, under control by the normalization controller, and
the general purpose register is used as a temporary site of storage of an intermediary result of the normalization.

13. The SIMD processor according to claim 1, wherein operation units of the first and second PEs in the one group are connected via the inter-PE operation unit connection path, wherein the first PE includes:

a control circuit;
a general purpose register set;
an operation unit set; and
a data memory, wherein
an output of the general purpose register set is selected by a selector (mux1-0) controlled by the control circuit, and is supplied as operands (opr0, opr1) of an instruction for operations to the operation unit set and to the data memory, and wherein
the operation unit set includes:

an adder/subtractor;
a multiplier; and
a barrel shifter,
respective operation units of the operation unit set performing operations on operands (opr0, opr1) supplied from the selector (mux1-0) under control by the control circuit, the result of the operations by the operation unit set being selected by a selector (mux1-1), controlled by the control circuit, so as to be supplied to a selector (mux5), the data memory writing an output of the selector (mux1-0) and data from an external memory data transfer network in a memory device under control by the control circuit,

data read from the memory device being supplied to the selector (mux5) and to the external memory data transfer network,

the selector (mux5) selecting one of:
the result of selection of the selector (mux1-1);
the read result of the data memory; and
the contents of the register of the second PE provided via the inter-PE operation unit connection path, under control by the control circuit, the selected one being supplied to the general purpose register set.

**14.** The SIMD processor according to claim 13, wherein the second PE includes:

a control circuit;
a general purpose register set;
an operation unit set; and
a data memory, wherein
the operation unit set includes:

an adder/subtractor;
a multiplier; and
a barrel shifter,
an output of the general purpose register set being selected by the selector (mux2-0), controlled by the control circuit, so as to be supplied to the operation unit set and to the data memory;

the second PE further including:

a selector (mux0) that selects one of the result of selection of the selector (mux4) and the result of selection of the selector (mux3), under control by the control circuit, to supply the selected one to the first register (GPL 20) of the register set;
a selector (mux1) that selects one of the selected result of the selector (mux4) and a bit string read from the second register (GPR 21) of the register set from which the LSB (Least Significant Bit) has been removed and to the MSB (Most Significant Bit) of which is added 0, the selector (mux1) supplying the selected one to the second register (GPR 21); and
a selector (mux2) that selects one of the selected result of the selector (mux4) and a bit string read from the third register (GPR 22) of the register set from which the MSB has been removed and to the LSB of which is added the MSB of the result of subtraction of the adder/subtractor, the selector (mux2) supplying the selected one to the second register (GPR 22);
an operation unit of the operation unit set performing an operation on the operands (opr0, opr1) supplied from the selector (mux2-0) under control by the control circuit, the result of the operation being selected by a selector (mux2-1), controlled by the control circuit, so as to be supplied to the selector (mux4),
the data memory writing an output of the selector (mux2-0) and data from an external memory data transfer network in a memory device and data read from the memory devices being supplied to the selector (mux4) and to the external memory data transfer network,
the selector (mux3) selecting one of the result of the operation of the adder/subtractor and the one operand selected by the selector (mux2-0), under control by the control circuit,
the selector (mux3) supplying the selected one to the selector (mux0),
the selector (mux4) selecting one of the result of selection by the selector (mux2-1) and the read result of the data memory, under control by the control circuit, to supply the selected one to the general purpose register set.

**15.** The SIMD processor according to claim 4, wherein operation units of the first and second PEs in the one group are connected via the inter-PE operation unit connection path, the first PE includes:

a control circuit,
a general purpose register set and
a data memory,
first, second and third registers (GPR 10, GPR 11 and GPR12) of the general purpose register set being updated by the results of selection of selectors (mux00, mux01 and mux02) associated therewith; the remaining registers of the general purpose register set being updated by the result of selection by a selector (mux07),
an output of the general purpose register set being selected by the selector (mux1-0) and supplied as operands (opr0, opr1) to the operation unit set and to the data memory,
the selector (mux00) selecting one of the first operand (fopr1) of a floating decimal point add/subtract instruction supplied from the second PE via the inter-PE operation unit connection path and the result of selection by the selector (mux07), under control by the control circuit, to supply the selected one to the first register (GPR 10),
the selector (mux01) selecting one of the second operand (fopr1) of the floating decimal point add/subtract instruction supplied from the second PE via the inter-PE operation unit connection path and the result of selection by the selector (mux07), under control by the control circuit, to supply the selected one to the second register (GPR 11),
the selector (mux02) selecting one of a bit string, composed of a lower order half of the result of the operation of the differentiator of the operation unit set and a lower order half of the third register (GPR 12) as lower half and upper half, respectively, and the result of selection by the selector (mux07), to supply the selected one to the third register (GPR 12), and wherein

the operation unit set includes:

an adder/subtractor;
a multiplier;
a differentiator; and
a barrel shifter,
the adder/subtractor performing an operation on the result of selection of the selector (mux03) and the operand (opr1), as operands, under control by the control circuit,
the multiplier performing an operation on the operands (opr0, opr1) as operands, under control by the control circuit,
the differentiator performing an operation on the results of selection by the selector (mux04) and the selector (mux05), as operands, under control by the control circuit,
the barrel shifter performing an operation on the operand (opr0) and on the result of selection by the selector (mux06), as operands, under control by the control circuit,
the result of the operation unit set being selected by the selector (mux1-1), controlled by the control circuit, so as to be supplied to the selector (mux07),
the selector (mux03) selecting one of the result of the operation by the barrel shifter and the operand (opr0), under control by the control circuit, to supply the selected one to the adder/subtractor,
the selector (mux04) selecting one of an exponent part (E0) of an operand (fopr0) of a floating decimal point add/ subtract instruction as supplied from the second PE via the inter-PE operation unit connection path, and the operand (fopr0), under control by the control circuit, to supply the selected one to the differentiator,
the selector (mux05) selecting one of an exponent part of an operand (fopr1) of a floating decimal point add/ subtract instruction as supplied from the second PE via the inter-PE operation unit connection path, under control by the control circuit, to supply the selected one to the differentiator,
the selector (mux06) selecting one of a bit string composed of a lower order half of the register (GPR 12) and 0s stuffed in an upper half thereof, and the operand (opr1), under control by the control circuit, to supply the selected one to the barrel shifter,
the data memory writing data from the general purpose register set and from the external memory data transfer network in a memory device and data read from the memory devices being supplied to the selector (mux07) and to the external memory data transfer network, under control by the control circuit,
the selector (mux07) selecting one of the result of selection by the selector (mux1-1) and the read result of the data memory under control by the control circuit, to supply the result of selection to the general purpose register set.

16. The processor for parallel operation according to claim 15, wherein the second PE includes:

a control circuit;
a general purpose register set;
an operation unit set; and
a data memory;
first and second registers (GPR 20, GPR 21) of the general purpose register set being updated by the results of selection of selectors (mux08, mux09); a third register . (GPR 22) and the remaining registers being updated by the result of selection by a formatting unit,
an output of the general purpose register set being selected by the selector (mux2-0), controlled by the control circuit, so as to be supplied as operands (opr0, opr1) to the operation unit set and to the data memory,
the selector (mux08) selecting one of a bit string composed of an intermediary result of exponent parts (tmpe) provided by the first PE via the inter-PE operation unit connection path as a lower order part and a result of the sign (sign) as an upper bit, and the result of selection of the selector (mux 15), to supply the selected one to the third register (GPR 20),
the selector (mux09) selecting one of the result of the operation of the differentiator of the operation unit set and the result of selection of the selector (mux15), under control by the control circuit, to supply the selected one to the second register (GPR 21) of the general purpose register set, and wherein
the operation unit set includes:

an adder/subtractor,
a multiplier;
a differentiator, and
a barrel shifter;
the adder/subtractor performing an operation on the results of selection of the selector (mux03) and the selector (mux11) as operands, under control by the control circuit,
the multiplier performing an operation on the operands (opr0, opr1), as operands, under control by the control circuit,
the differentiator performing an operation on the results of selection by the selector (mux12) and the selector (mux13), as operands, under control by the control circuit,

the barrel shifter performing an operation on the operand (opr0) and on the result of selection by the selector (mux14), as operands, under control by the control circuit, the result of the operations of the operation unit set being selected by the selector (mux2-1), controlled by the control circuit, so as to be supplied to the selector (mux15), the selector (mux10) selecting one of the result of the operation by the barrel shifter and the operand (opr0), under control by the control circuit, to supply the selected one to the adder/subtractor, the selector (mux11) selecting one of a value 1 and the operand (opr1), under control by the control circuit, to supply the selected one to the adder/subtractor, the selector (mux12) selecting one of the intermediary result of the mantissa part (tmpf) provided by the first PE via the inter-PE operation unit connection path, and the operand (opr0), under control by the control circuit, to supply the selected one to the differentiator, the selector (mux13) selecting one of the value 0 and the operand (opr1), under control by the control circuit, to supply the selected one to the differentiator, the selector (mux14) selecting one of the result of the operation of the leading-one and the operand (opr1) to supply the selected one to the barrel shifter, the operation unit set including a leading-one, an adder and a rounding detection unit, used exclusively for execution of a floating decimal point add/ subtract instruction, the leading-one retrieving the bit string of the operand (opr0) from an MSB side to calculate the distance from the MSB to the first appearance of 1 to supply the distance calculated to the adder and the selector (mux14), the adder summing a partial bit string of the operand (opr1) to the retrieved result of the leading-one to supply the result of the addition to the formatting unit, the rounding detection unit deciding whether or not the result of the operations by the barrel shifter is in need of rounding, and supplying the result of the decision to the selector (mux2-1), the data memory writing data from the general purpose register set and from the external memory data transfer network in a memory device and data read from the memory devices being supplied to the selector (mux15) and to the external memory data transfer network, under control by the control circuit,
the selector (mux15) selecting one of the result of selection by the selector (mux2-1) and the read result of the data memory, under control by the control circuit, to supply the selected one to the formatting unit, the formatting unit selecting the result of selection by the selector (mux15) as a mantissa part, selecting the result of the operation by the adder/subtractor as an exponent part and selecting the result of the sign (sign) as a sign part, under control by the control circuit; the formatting unit setting the form and providing the resulting form to the general purpose register set.

## Patentansprüche

1. SIMD-Prozessor mit:

   mehreren Verarbeitungselementen (PEs) (10-1, 10-2), die dazu geeignet sind, Operationen als eine Gruppe auszuführen, wobei die Verarbeitungselemente über einen bidirektionalen Inter-PE-Operationseinheitverbindungspfad (50) verbunden sind, wobei die Gruppe aus mehreren Verarbeitungselementen zum Ausführen einer Multi-Zyklus-Anweisung aufgebaut ist, die komplexer ist als eine durch ein einzelnes Verarbeitungselement ausführbare Anweisung; und
   einem Steuerprozessor (20), der eine Anweisung und Steuerinformation zum Zuführen zu den Verarbeitungselementen (10-1, 10-2) erzeugt,
   wobei die Verarbeitungselemente (10-1, 10-2), die die Gruppe zum Ausführen einer Multi-Zyklus-Anweisung bilden, Operationseinheiten und Mehrzweckregister davon nutzen, um als ein Parallel-Operationsprozessor zu funktionieren,
   wobei, wenn die durch die eine Gruppe von PEs (10-1, 10-2) ausgeführte Anweisung eine Multi-Zyklus-(Teilen durch ganze Zahl)-Anweisung ist,
   ein erstes PE in der einen Gruppe als ein Zähler arbeitet, der die Anzahl von Zyklen der Multi-Zyklus-(Teilen durch ganze Zahl)-Anweisung zählt, und
   ein zweites PE in der einen Gruppe in Antwort auf den Zähler einen Divisor eine der Anzahl von Zyklen entsprechende Anzahl von Malen von einem Dividenden der Multi-Zyklus-(Teilen durch ganze Zahl)-Anweisung subtrahiert.

2. SIMD-Prozessor nach Anspruch 1, wobei das erste PE aufweist:

einen Addierer/Subtrahierer (Add/Sub-1); und
ein Mehrzweckregister (GPR 10), wobei
bei der Ausführung der Multi-Zyklus-(Teilen durch ganze Zahl)-Anweisung das erste PE (10-1) einen Zykluszählwert im Mehrzweckregister des ersten PE speichert und den Zählwert durch den Addierer/Subtrahierer aktualisiert.

3. SIMD-Prozessor nach Anspruch 1, wobei das erste PE aufweist:

einen Addierer/Subtrahierer (Add/Sub-1); und
ein Mehrzweckregister (GPR 10), wobei
bei der Ausführung der Multi-Zyklus-(Teilen durch ganze Zahl)-Anweisung das zweite PE (10-2) einen Divisor, einen Dividenden und ein Zwischenergebnis einer Division im Mehrzweckregister speichert, der Addierer/Subtrahierer (Add/Sub-1) den Dividenden vom Divisor subtrahiert und das Ergebnis der Division als das Zwischenergebnis der Division im Mehrzweckregister speichert.

4. SIMD-Prozessor mit:

mehreren Verarbeitungselementen (PEs) (10-1, 10-2), die dazu geeignet sind, Operationen als eine Gruppe auszuführen, wobei die Verarbeitungselemente über einen bidirektionalen Inter-PE-Operationseinheitverbindungspfad (50) verbunden sind, wobei die Gruppe aus mehreren Verarbeitungselementen zum Ausführen einer Multi-Zyklus-Anweisung aufgebaut ist, die komplexer ist als eine durch ein einzelnes Verarbeitungselement ausführbare Anweisung; und
einem Steuerprozessor (20), der eine Anweisung und Steuerinformation zum Zuführen zu den Verarbeitungselementen erzeugt,
wobei die Verarbeitungselemente (10-1, 10-2), die eine Gruppe zum Ausführen einer Multi-Zyklus-Anweisung bilden, Operationseinheiten und Mehrzweckregister davon nutzen, um als ein Parallel-Operationsprozessor zu funktionieren,
wobei, wenn die durch die eine Gruppe ausgeführte Anweisung eine Multi-Zyklus-Gleitkomma-Addieren/Subtrahieren-Anweisung ist,
ein erstes PE (10-1) in der einen Gruppe eine Addition/Subtraktion bezüglich Gleitkommaoperanden ausführt, und
ein zweites PE (10-2) in der einen Gruppe eine Verarbeitung zum Normieren des Additions-/Subtraktionsergebnisses ausführt.

5. SIMD-Prozessor nach Anspruch 4, wobei das erste PE aufweist:

einen Addierer/Subtrahierer (Add/Sub-1);
einen Differenzierer (Abs-1);
einen Barrel-Shifter; und
ein Mehrzweckregister (GPR 10), wobei
beim Ausführen der Multi-Zyklus-Gleitkomma-Addieren/Subtrahieren-Anweisung:

der Differenzierer und der Barrel-Shifter die Gleitkommapositionsregistrierung im ersten PE bewirken,
der Addierer/Subtrahierer das Ergebnis der Gleitkommapositionsregistrierung addiert/subtrahiert, und
das Mehrzweckregister als eine Einrichtung zum Zwischenspeichern des Ergebnisses der Gleitkommapositionsregistrierung und des Ergebnisses der Addition/Subtraktion verwendet wird.

6. SIMD-Prozessor nach Anspruch 4, wobei das zweite PE aufweist:

einen Addierer/Subtrahierer (Add/Sub-2);
einen Differenzierer (Abs-2);
einen Barrel-Shifter;
ein Mehrzweckregister (GPR 20); und
einen Normierungscontroller, wobei
beim Ausführen der Multi-Zyklus-Gleitkomma-Addieren/Subtrahieren-Anweisung im zweiten PE:

der Addierer/Subtrahierer, der Differenzierer und der Barrel-Shifter das Ergebnis der Addition/Subtraktion des ersten PE unter der Steuerung des Normierungscontrollers normieren, und
das Mehrzweckregister als eine Einrichtung zum Zwischenspeichern eines Zwischenergebnisses der Normierung verwendet wird.

7. SIMD-Prozessor mit:

mehreren Verarbeitungselementen (PEs) (10-1, 10-2), die dazu geeignet sind, Operationen als eine Gruppe auszuführen, wobei die Verarbeitungselemente über einen bidirektionalen Inter-PE-Operationseinheitverbindungspfad (50) verbunden sind, wobei die Gruppe aus mehreren Verarbeitungselementen zum Ausführen einer Multi-Zyklus-Anweisung aufgebaut ist, die komplexer ist als eine durch ein einzelnes Verarbeitungselement ausführbare Anweisung; und
einem Steuerprozessor (20), der eine Anweisung und Steuerinformation zum Zuführen zu den Verarbeitungselementen erzeugt,
wobei die Verarbeitungselemente (10-1, 10-2), die eine Gruppe zum Ausführen einer Multi-Zyklus-Anweisung bilden, Operationseinheiten und Mehrzweckregister davon nutzen, um als ein Parallel-Operationsprozessor zu funktionieren,

wobei, wenn die durch die eine Gruppe ausgeführte Anweisung eine Multi-Zyklus-Gleitkomma-Multiplizieren-Anweisung ist,

ein erstes PE (10-1) in der einen Gruppe eine Verarbeitung zum Multiplizieren zweier Gleitkommaoperanden und einen Teil einer Normierung des Multiplikationsergebnisses ausführt, und

ein zweites PE (10-2) in der Gruppe in Zusammenwirkung mit dem ersten PE arbeitet, um das Multiplikationsergebnis zu normieren.

**8.** SIMD-Prozessor nach Anspruch 7, wobei das erste PE aufweist:

einen Multiplizierer;
einen Barrel-Shifter;
eine Leading-One- (Führende Eins) Schaltung; und
ein Mehrzweckregister, wobei
beim Ausführen der Multi-Zyklus-Gleitkomma-Multiplizieren-Anweisung:

der Multiplizierer im ersten PE die Mantissenteile von Operanden multipliziert,
der Barrel-Shifter einen Teil einer Normierung des Multiplikationsergebnisses ausführt, und
das Mehrzweckregister als eine Einrichtung zum Zwischenspeichern des Multiplikationsergebnisses und eines Zwischenergebnisses der Normierung verwendet wird.

**9.** SIMD-Prozessor nach Anspruch 7, wobei das erste PE aufweist:

einen Addierer/Subtrahierer;
einen Barrel-Shifter;
ein Mehrzweckregister; und
einen Normierungscontroller, wobei
beim Ausführen der Multi-Zyklus-Gleitkomma-Multiplizieren-Anweisung:

im ersten PE der Addierer/Subtrahierer, der Barrel-Shifter und der Barrel-Shifter das Multiplikationsergebnis unter der Steuerung des Normierungscontrollers normieren, und
das Mehrzweckregister als eine Einrichtung zum Zwischenspeichern eines Zwischenergebnisses der Normierung verwendet wird.

**10.** SIMD-Prozessor mit:

mehreren Verarbeitungselementen (PEs) (10-1, 10-2), die dazu geeignet sind, Operationen als eine Gruppe auszuführen, wobei die Verarbeitungselemente über einen bidirektionalen Inter-PE-Operationseinheitverbindungspfad (50) verbunden sind, wobei die Gruppe aus mehreren Verarbeitungselementen zum Ausführen einer Multi-Zyklus-Anweisung aufgebaut ist, die komplexer ist als eine durch ein einzelnes Verarbeitungselement ausführbare Anweisung; und

einem Steuerprozessor (20), der eine Anweisung und Steuerinformation zum Zuführen zu den Verarbeitungselementen erzeugt,

wobei die Verarbeitungselemente (10-1, 10-2), die eine Gruppe zum Ausführen einer Multi-Zyklus-Anweisung bilden, Operationseinheiten und Mehrzweckregister davon nutzen, um als ein Parallel-Operationsprozessor zu funktionieren,

wobei, wenn die durch die eine Gruppe ausgeführte Anweisung eine Multi-Zyklus-Gleitkomma-Dividieren-Anweisung ist,

ein erstes PE in der einen Gruppe eine Division zweier Gleitkommaoperanden ausführt, und
wobei ein zweites PE in der einen Gruppe die Zyklenanzahl der Ausführung der Division zählt und das Divisionsergebnis normiert.

**11.** SIMD-Prozessor nach Anspruch 10, wobei das erste PE aufweist:

einen Addierer/Subtrahierer; und
ein Mehrzweckregister, wobei
beim Ausführen der Multi-Zyklus-Gleitkomma-Dividieren-Anweisung:

im ersten PE ein Divisor, ein Dividend und ein Zwischenergebnis einer Division im Mehrzweckregister gespeichert werden, und
der Dividend durch den Addierer/Subtrahierer vom Divisor subtrahiert wird, um das Subtraktionsergebnis als Zwischenergebnis der Division zu speichern.

**12.** SIMD-Prozessor nach Anspruch 10, wobei das zweite PE aufweist:

einen Addierer/Subtrahierer;
einen Barrel-Shifter;
ein Mehrzweckregister; und
einen Normierungscontroller, wobei
beim Ausführen der Multi-Zyklus-Gleitkomma-Dividieren-Anweisung im zweiten PE:

der Zykluszählwert im Mehrzweckregister gespeichert wird,

der Zählwert durch den Addierer/Subtrahierer aktualisiert wird,

das Divisionsergebnis des ersten PE durch den Addierer/Subtrahierer und den Barrel-Shifter unter der Steuerung des Normierungscontrollers normiert wird, und

das Mehrzweckregister als eine Einrichtung zum Zwischenspeichern eines Zwischenergebnisses der Normierung verwendet wird.

13. SIMD-Prozessor nach Anspruch 1, wobei Operationseinheiten der ersten und zweiten PEs in der einen Gruppe über den Inter-PE-Operationseinheitverbindungspfad verbunden sind, wobei das erste PE aufweist:

   eine Steuerschaltung;
   einen Mehrzweckregistersatz;
   einen Operationseinheitsatz; und
   einen Datenspeicher, wobei
   eine Ausgabe des Mehrzweckregistersatzes durch eine durch die Steuerschaltung gesteuerte Auswahleinrichtung (mux1-0) ausgewählt und dem Operationseinheitsatz und dem Datenspeicher als Operanden (opr0, opr1) einer Anweisung für Operationen zugeführt wird, und wobei der Operationseinheitsatz aufweist:

      einen Addierer/Subtrahierer;
      einen Multiplizierer; und
      einen Barrel-Shifter,
      wobei jeweilige Operationseinheiten des Operationseinheitsatzes unter der Steuerung der Steuerschaltung Operationen bezüglich von der Auswahleinrichtung (mux1-0) zugeführten Operanden (opr0, opr1) ausführen,
      das Ergebnis der durch den Operationseinheitsatz ausgeführten Operationen gesteuert durch die Steuerschaltung durch eine Auswahleinrichtung (mux1-1) ausgewählt und einer Auswahleinrichtung (mux5) zugeführt wird,
      der Datenspeicher eine Ausgabe der Auswahleinrichtung (mux1-0) und Daten von einem externen Speicherdatenübertragungsnetzwerk unter der Steuerung der Steuerschaltung in eine Speichereinrichtung schreibt, und
      von der Speichereinrichtung ausgelesene Daten der Auswahleinrichtung (mux5) und dem externen Speicherdatenübertragungsnetzwerk zugeführt werden,

   wobei die Auswahleinrichtung (mux5) eines der folgenden Datenelemente auswählt:

      das Auswahlergebnis der Auswahleinrichtung (mux1-1);

das Ausleseergebnis des Datenspeichers; und

unter den Inhalten des Registers des zweiten PE, die über den Inter-PE-Operationseinheitverbindungspfad bereitgestellt werden, der ausgewählte Inhalt unter der Steuerung der Steuerschaltung dem Mehrzweckregistersatz zugeführt wird.

14. SIMD-Prozessor nach Anspruch 13, wobei das zweite PE aufweist:

   eine Steuerschaltung;
   einen Mehrzweckregistersatz;
   einen Operationseinheitsatz; und
   einen Datenspeicher, wobei
   der Operationseinheitsatz aufweist:

      einen Addierer/Subtrahierer;
      einen Multiplizierer; und
      einen Barrel-Shifter,
      wobei eine Ausgabe des Mehrzweckregistersatzes unter der Steuerung der Steuerschaltung durch die Auswahleinrichtung (mux2-0) ausgewählt und dem Operationseinheitsatz und dem Datenspeicher zugeführt wird,

   wobei das zweite PE ferner aufweist:

      eine Auswahleinrichtung (mux0), die das Auswahlergebnis der Auswahleinrichtung (mux4) oder das Auswahlergebnis der Auswahleinrichtung (mux3) unter der Steuerung der Steuerschaltung auswählt, um das ausgewählte Auswahlergebnis dem ersten Register (GPL 20) des Registersatzes zuzuführen;
      eine Auswahleinrichtung (mux1), die das Auswahlergebnis der Auswahleinrichtung (mux4) oder eine vom zweiten Register (GPR 21) des Registersatzes ausgelesene Bitfolge auswählt, von der das niedrigstwertige Bit (LSB) entfernt worden ist und zu dessen höchstwertigem Bit (MSB) der Wert "0" addiert worden ist, wobei die Auswahleinrichtung (mux1) das ausgewählte Datenelement dem zweiten Register (GPR 21) zuführt;
      eine Auswahleinrichtung (mux2), die das Auswahlergebnis der Auswahleinrichtung (mux4) oder eine vom dritten Register (GPR 22) des Registersatzes ausgelesene Bitfolge auswählt, von der das MSB entfernt worden ist und zu dessen LSB das MSB des Subtraktionsergebnisses des Addierers/Subtrahierers addiert worden ist, wobei die Auswahleinrichtung (mux2) das ausgewählte Datenelement dem zweiten Register (GPR 22) zuführt,

wobei eine Operationseinheit des Operationseinheitsatzes eine Operation bezüglich den unter der Steuerung der Steuereinrichtung von der Auswahleinrichtung (mux2-0) zugeführten Operanden (opr0, opr1) ausführt,

das Ergebnis unter der Steuerung der Steuerschaltung durch eine Auswahleinrichtung (mux2-1) ausgewählt wird, um es der Auswahleinrichtung (mux4) zuzuführen,

der Datenspeicher eine Ausgabe der Auswahleinrichtung (mux2-0) und Daten von einem externen Speicherdatenübertragungsnetzwerk in eine Speichereinrichtung schreibt, und von Speichereinrichtungen ausgelesene Daten der Auswahleinrichtung (mux4) und dem externen Speicherdatenübertragungsnetzwerk zugeführt werden,

die Auswahleinrichtung (mux3) das Operationsergebnis des Addierers/Subtrahierers oder den durch die Auswahleinrichtung (mux2-0) ausgewählten Operanden unter der Steuerung der Steuerschaltung auswählt,

die Auswahleinrichtung (mux3) das ausgewählte Datenelement der Auswahleinrichtung (mux0) zuführt, und

die Auswahleinrichtung (mux4) das Auswahlergebnis der Auswahleinrichtung (mux2-1) oder das Ausleseergebnis des Datenspeichers unter der Steuerung der Steuerschaltung auswählt, um das Ausgewählte dem Mehrzweckregistersatz zuzuführen.

15. SIMD-Prozessor nach Anspruch 4, wobei Operationseinheiten des ersten und des zweiten PE in der einen Gruppe über einen Inter-PE-Operationseinheitverbindungspfad verbunden sind, wobei das erste PE aufweist:

    eine Steuerschaltung;
    einen Mehrzweckregistersatz; und
    einen Datenspeicher,
    wobei ein erstes, ein zweites und ein drittes Register (GPR 10, GPR 11 und GPR 12) des Mehrzweckregistersatzes durch Auswahlergebnisse von ihnen zugeordneten Auswahleinrichtungen (mux00, mux01 und mux02) aktualisiert werden, und wobei die übrigen Register des Mehrzweckregistersatzes durch das Auswahlergebnis einer Auswahleinrichtung (mux07) aktualisiert werden,
    eine Ausgabe des Mehrzweckregistersatzes durch die Auswahleinrichtung (mux1-0) ausgewählt und als Operanden (opr0, opr1) dem Operationseinheitsatz und dem Datenspeicher zugeführt wird,

die Auswahleinrichtung (mux00) den ersten Operanden (fopr1) einer vom zweiten PE über den Inter-PE-Operationseinheitverbindungspfad zugeführten Gleitkomma-Addieren/Subtrahieren-Anweisung oder das Auswahlergebnis der Auswahleinrichtung (mux07) unter der Steuerung der Steuerschaltung auswählt, um das Ausgewählte dem ersten Register (GPR 10) zuzuführen,

die Auswahleinrichtung (mux01) den zweiten Operanden (fopr1) der vom zweiten PE über den Inter-PE-Operationseinheitverbindungspfad zugeführten Gleitkomma-Addieren/Subtrahieren-Anweisung oder das Auswahlergebnis der Auswahleinrichtung (mux07) unter der Steuerung der Steuerschaltung auswählt, um das Ausgewählte dem zweiten Register (GPR 11) zuzuführen,

die Auswahleinrichtung (mux02) eine Bitfolge, die aus einer Hälfte von Bits niedriger Ordnung des Operationsergebnisses des Differenzierers des Operationseinheitssatzes und einer Hälfte von Bits niedriger Ordnung des dritten Registers (GPR 12) als untere bzw. obere Hälfte besteht, oder das Auswahlergebnis der Auswahleinrichtung (mux07) auswählt, um das Ausgewählte dem dritten Register (GPR 12) zuzuführen, und wobei der Operationseinheitsatz aufweist:

    einen Addierer/Subtrahierer;
    einen Multiplizierer;
    einen Differenzierer; und
    einen Barrel-Shifter,
    wobei der Addierer/Subtrahierer unter der Steuerung der Steuerschaltung eine Operation bezüglich des Auswahlergebnisses der Auswahleinrichtung (mux03) und des Operanden (opr1) als Operanden ausführt,
    der Multiplizierer unter der Steuerung der Steuerschaltung eine Operation bezüglich der Operanden (opr0, opr1) als Operanden ausführt,
    der Differenzierer unter der Steuerung der Steuerschaltung eine Operation bezüglich der Auswahlergebnisse der Auswahleinrichtung (mux04) und der Auswahleinrichtung (mux05) als Operanden ausführt.
    Der Barrel-Shifter unter der Steuerung der Steuerschaltung eine Operation bezüglich des Operanden (opr0) und des Auswahlergebnisses der Auswahleinrichtung (mux06) als Operanden ausführt,
    das Ergebnis des Operationseinheitsatzes unter der Steuerung der Steuerschaltung durch die Auswahleinrichtung (mux1-1) ausgewählt wird, um es der Auswahleinrichtung (mux07) zuzuführen,

die Auswahleinrichtung (mux03) unter der Steuerung der Steuerschaltung das Operationsergebnis des Barrel-Shifters oder den Operanden (opr0) auswählt, um das Ausgewählte dem Addierer/Subtrahierer zuzuführen,

die Auswahleinrichtung (mux04) unter der Steuerung der Steuerschaltung einen Exponententeil (E0) eines Operanden (fopr0) einer Gleitkomma-Addieren/Subtrahieren-Anweisung , die vom zweiten PE über den Inter-PE-Operationseinheitverbindungspfad zugeführt wird, oder den Operanden (fopr0) auswählt, um das Ausgewählte dem Differenzierer zuzuführen,

die Auswahleinrichtung (mux05) unter der Steuerung der Steuerschaltung einen Exponententeil eines Operanden (fopr1) einer Gleitkomma-Addieren/Subtrahieren-Anweisung , die vom zweiten PE über den Inter-PE-Operationseinheitverbindungspfad zugeführt wird, auswählt, um das Ausgewählte dem Differenzierer zuzuführen,

die Auswahleinrichtung (mux06) unter der Steuerung der Steuerschaltung eine Bitfolge, die aus einer Hälfte von Bits niedriger Ordnung des Registers (GPR 12) besteht, und deren obere Hälfte mit Nullen aufgefüllt ist, oder den Operanden (opr1) auswählt, um das Ausgewählte dem Barrel-Shifter zuzuführen,

der Datenspeicher unter der Steuerung der Steuerschaltung Daten vom Mehrzweckregistersatz und vom externen Speicherdatenübertragungsnetzwerk in eine Speichereinrichtung schreibt und von der Speichereinrichtung gelesene Daten der Auswahleinrichtung (mux07) und dem externen Speicherdatenübertragungsnetzwerk zugeführt werden, und

die Auswahleinrichtung (mux07) das Auswahlergebnis der Auswahleinrichtung (mux1-1) oder das Ausleseergebnis des Datenspeichers unter der Steuerung der Steuerschaltung auswählt, um das Ergebnis der Auswahl dem Mehrzweckregistersatz zuzuführen.

16. Prozessor für einen Parallelbetrieb nach Anspruch 15, wobei das zweite PE aufweist:

  eine Steuerschaltung;
  einen Mehrzweckregistersatz;
  einen Operationseinheitsatz; und
  einen Datenspeicher,

wobei ein erstes und ein zweites Register (GPR 20, GPR 21) des Mehrzweckregistersatzes durch Auswahlergebnisse von Auswahleinrichtungen (mux08, mux09) aktualisiert werden, und wobei ein drittes Register (GPR 22) und die übrigen Register durch das Auswahlergebnis einer Formattiereinheit aktualisiert werden,

eine Ausgabe des Mehrzweckregistersatzes unter der Steuerung der Steuerschaltung durch die Auswahleinrichtung (mux2-0) ausgewählt wird, um als Operanden (opr0, opr1) dem Operationseinheitsatz und dem Datenspeicher zugeführt zu werden,

die Auswahleinrichtung (mux08) eine Bitfolge, die aus einem Zwischenergebnis von Exponententeilen (tmpe), die durch das erste PE über den Inter-PE-Operationseinheitverbindungspfad als ein Bitteil niedriger Ordnung bereitgestellt wird, und einem Ergebnis des Vorzeichens (sign) als ein oberes Bit aufgebaut ist, oder das Auswahlergebnis der Auswahleinrichtung (mux15) auswählt, um das Ausgewählte dem dritten Register (GPR 20) zuzuführen,

die Auswahleinrichtung (mux09) unter der Steuerung der Steuerschaltung das Operationsergebnis des Differenzierers des Operationseinheitsatzes oder das Auswahlergebnis der Auswahleinrichtung (mux15) auswählt, um das Ausgewählte dem zweiten Register (GPR 21) des Mehrzweckregistersatzes zuzuführen, und wobei

der Operationseinheitsatz aufweist:

  einen Addierer/Subtrahierer;
  einen Multiplizierer;
  einen Differenzierer; und
  einen Barrel-Shifter,

  wobei der Addierer/Subtrahierer unter der Steuerung der Steuerschaltung eine Operation bezüglich der Auswahlergebnisse der Auswahleinrichtung (mux03) und der Auswahleinrichtung (mux11) als Operanden ausführt,

  der Multiplizierer unter der Steuerung der Steuerschaltung eine Operation bezüglich der Operanden (opr0, opr1) als Operanden ausführt,

  der Differenzierer unter der Steuerung der Steuerschaltung eine Operation bezüglich der Auswahlergebnisse der Auswahleinrichtung (mux12) und der Auswahleinrichtung (mux13) als Operanden ausführt,

  der Barrel-Shifter unter der Steuerung der Steuerschaltung eine Operation bezüglich des Operanden (opr0) und des Auswahlergebnisses der Auswahleinrichtung (mux14) als Operanden ausführt,

  das Ergebnis der Operationen des Operationseinheitsatzes unter der Steuerung der Steuerschaltung durch die Auswahleinrichtung (mux2-1) ausgewählt wird, um es der Auswahleinrichtung (mux15) zuzuführen,

die Auswahleinrichtung (mux10) unter der Steuerung der Steuerschaltung das Operationsergebnis des Barrel-Shifters oder den Operanden (opr0) auswählt, um das Ausgewählte dem Addierer/Subtrahierer zuzuführen,

die Auswahleinrichtung (mux11) unter der Steuerung der Steuerschaltung einen Wert 1 oder den Operanden (opr1) auswählt, um das Ausgewählte dem Addierer/Subtrahierer zuzuführen,

die Auswahleinrichtung (mux12) unter der Steuerung der Steuerschaltung das durch das erste PE über den Inter-PE-Operationseinheitverbindungspfad bereitgestellte Zwischenergebnis des Mantissenteils (tmpf) oder den Operanden (opr0) auswählt, um das Ausgewählte dem Differenzierer zuzuführen,

die Auswahleinheit (mux13) unter der Steuerung der Steuerschaltung den Wert 0 oder den Operanden (opr1) auswählt, um das Ausgewählte dem Differenzierer zuzuführen,

die Auswahleinheit (mux14) das Operationsergebnis der Leading-One-Schaltung oder den Operanden (opr1) auswählt, um das Ausgewählte dem Barrel-Shifter zuzuführen,

der Operationseinheitsatz eine Leading-One-Schaltung, einen Addierer und eine Rundungserfassungseinheit aufweist, die ausschließlich zum Ausführen einer Gleitkomma-Addieren/Subtrahieren-Anweisung verwendet wird,

die Leading-One-Schaltung die Bitfolge des Operanden (opr0) von einer MSB-Seite erfasst, um den Abstand vom MSB zum ersten Auftreten einer 1 zu berechnen, um den berechneten Abstand dem Addierer und der Auswahleinrichtung (mux14) zuzuführen,

der Addierer eine Teil-Bitfolge des Operanden (opr1) zum erfassten Ergebnis der Leading-One-Schaltung addiert, um das Additionsergebnis der Formattiereinheit zuzuführen,

die Rundungserfassungseinheit entscheidet, ob das Ergebnis der Operationen von dem Barrel-Shifter gerundet werden muss oder nicht, und das Entscheidungsergebnis der Auswahleinrichtung (mux2-1) zuführt,

der Datenspeicher Daten vom Mehrzweckregistersatz und vom externen Speicherdatenübertragungsnetzwerk in eine Speichereinrichtung schreibt und von der Speichereinrichtung gelesene Daten unter der Steuerung der Steuerschaltung der Auswahleinrichtung (mux15) und dem externen Speicherdatenübertragungsnetzwerk zugeführt werden,

die Auswahleinrichtung (mux15) das Auswahlergebnis der Auswahleinrichtung (mux2-1) oder das Ausleseergebnis des Datenspeichers unter der Steuerung der Steuerschaltung auswählt, um das Ausgewählte der Formattiereinheit zuzuführen, und

die Formattiereinheit unter der Steuerung der Steuerschaltung das Auswahlergebnis der Auswahleinrichtung (mux15) als Mantissenteil auswählt, das Operationsergebnis des Addierers/Subtrahierers als Exponententeil auswählt, und das Ergebnis des Vorzeichens (sign) als Vorzeichenteil auswählt, und die Formattiereinheit das Format festlegt und das erhaltene Format dem Mehrzweckregistersatz zuführt.

## Revendications

1. Processeur SIMD, comprenant
   une pluralité d'éléments de traitement (PE) (10-1, 10-2) adaptée pour effectuer des opérations comme un groupe, dans lequel les éléments de traitement sont connectés sur un chemin de connexion d'unité d'opération inter-PE bidirectionnel (50), dans lequel le groupe est composé d'une pluralité d'éléments de traitement pour exécuter une instruction multi-cycle qui est plus complexe qu'une instruction exécutable par un seul élément de traitement ; et
   un processeur de contrôle (20) qui génère une instruction et des informations de contrôle pour fournir aux éléments de traitement (10-1, 10-2),
   les éléments de traitement (10-1, 10-2), qui constituent le groupe pour exécuter une instruction multi-cycle, en utilisant des unités d'opération et des registres généraux de celles-ci pour fonctionner comme un processeur d'opération parallèle,
   dans lequel dans le cas où l'instruction exécutée par ledit un groupe des PE (10-1, 10-2) est une instruction de division d'entier multi-cycle,
   un premier PE dans ledit un groupe opère comme un compteur qui compte le nombre de cycles de l'instruction de division d'entier multi-cycle, et
   un second PE dans ledit un groupe, en réponse au compteur, soustrait un diviseur d'un dividende de l'instruction de division d'entier multi-cycle, un nombre de fois égal au nombre de cycles.

2. Processeur SIMD selon la revendication 1, dans lequel le premier PE comprend :

un additionneur/soustracteur (Add/Sub-1) ; et
un registre général (GPR 10), et dans lequel
en exécutant l'instruction de division d'entier
multi-cycle, le premier PE (10-1) stocke une valeur de compte de cycle dans le registre général
du premier PE et met à jour la valeur de compte
par l'additionneur/soustracteur.

3. Processeur SIMD selon la revendication 1, dans lequel le premier PE comprend :

un additionneur/soustracteur (Add/Sub-1) ; et
un registre général (GPR 10), dans lequel,
en exécutant l'instruction de division d'entier
multi-cycle, le second PE (10-2) stocke un diviseur, un dividende et un résultat de division intermédiaire dans le registre général, l'additionneur/soustracteur (Add/Sub-1) soustrayant le
dividende du diviseur et stockant le résultat de
la division dans le registre général comme le
résultat de division intermédiaire.

4. Processeur SIMD, comprenant une pluralité d'éléments de traitement (PE) (10-1, 10-2) adaptée pour
effectuer des opérations comme un groupe, dans
lequel les éléments de traitement sont connectés sur
un chemin de connexion d'unité d'opération inter-PE
bidirectionnel (50), dans lequel le groupe est composé d'une pluralité d'éléments de traitement pour
exécuter une instruction multi-cycle qui est plus complexe qu'une instruction exécutable par un seul élément de traitement ; et
un processeur de contrôle (20) qui génère une instruction et des informations de contrôle pour fournir
aux éléments de traitement,
les éléments de traitement (10-1, 10-2), qui constituent un groupe pour exécuter une instruction multi-
cycle, en utilisant des unités d'opération et des registres généraux de celles-ci pour fonctionner comme un processeur d'opération parallèle,
dans lequel dans le cas où l'instruction exécutée par
ledit un groupe est une instruction d'addition/soustraction à virgule décimale flottante multi-cycle,
un premier PE (10-1) dans ledit un groupe effectue
l'addition/soustraction sur des opérandes à virgule
décimale flottante, et
un second PE (10-2) dans ledit un groupe effectue
un traitement de normalisation du résultat de l'addition/soustraction.

5. Processeur SIMD selon la revendication 4, dans lequel le premier PE comprend :

un additionneur/soustracteur (Add/Sub-1) ;
un différentiateur (Abs-1) ;
un décaleur à barillet ; et
un registre général (GPR 10), et dans lequel
en exécutant l'instruction d'addition/soustraction à virgule décimale flottante multi-cycle,
le différentiateur et le décaleur à barillet effectuent l'enregistrement de position de virgule décimale dans le premier PE,
l'additionneur/soustracteur additionne/soustrait
le résultat de l'enregistrement de position de virgule décimale, et
le registre général est utilisé comme un site de
stockage temporaire du résultat de l'enregistrement de position de virgule décimale et du résultat de l'addition/soustraction.

6. Processeur SIMD selon la revendication 4, dans lequel le second PE comprend :

un additionneur/soustracteur (Add/Sub-2) ;
un différentiateur (Abs-2) ;
un décaleur à barillet ;
un registre général (GPR 20), et
un contrôleur de normalisation, et dans lequel,
en exécutant l'instruction d'addition/soustraction à virgule décimale flottante multi-cycle,
dans le second PE,
l'additionneur/soustracteur, le différentiateur et
le décaleur à barillet normalisent le résultat de
l'addition/soustraction du premier PE, sous contrôle par le contrôleur de normalisation, et
le registre général est utilisé comme un site de
stockage temporaire d'un résultat intermédiaire
de la normalisation.

7. Processeur SIMD, comprenant une pluralité d'éléments de traitement (PE) (10-1, 10-2) adaptée pour
effectuer des opérations comme un groupe, dans
lequel les éléments de traitement sont connectés sur
un chemin de connexion d'unité d'opération inter-PE
bidirectionnel (50), dans lequel le groupe est composé d'une pluralité d'éléments de traitement pour
exécuter une instruction multi-cycle qui est plus complexe qu'une instruction exécutable par un seul élément de traitement ; et
un processeur de contrôle (20) qui génère une instruction et des informations de contrôle pour fournir
aux éléments de traitement,
les éléments de traitement (10-1, 10-2), qui constituent un groupe pour exécuter une instruction multi-
cycle, en utilisant des unités d'opération et des registres généraux de celles-ci pour fonctionner comme un processeur d'opération parallèle, dans lequel
dans le cas où l'instruction exécutée par ledit un
groupe est une instruction de multiplication à virgule
décimale flottante multi-cycle,
un premier PE (10-1) dans ledit un groupe exécute
un traitement de multiplication de deux opérandes à
virgule décimale flottante et d'une partie de normalisation du résultat de multiplication, et
un second PE (10-2) dans le groupe opère en coopération avec le premier PE pour normaliser le résultat de la multiplication.

8. Processeur SIMD selon la revendication 7, dans lequel le premier PE comprend :

    un multiplicateur ;
    un décaleur à barillet ;
    un circuit un en tête ; et
    un registre général, dans lequel,
    en exécutant l'instruction de multiplication à virgule décimale flottante multi-cycle,
    le multiplicateur dans le premier PE multiplie les parties mantisse d'opérandes,
    le décaleur à barillet effectue une partie de normalisation du résultat de la multiplication, et
    le registre général est utilisé comme un site de stockage temporaire du résultat de la multiplication et d'un résultat intermédiaire de la normalisation.

9. Processeur SIMD selon la revendication 7, dans lequel le premier PE comprend :

    un additionneur/soustracteur ;
    un décaleur à barillet ;
    un registre général ; et
    un contrôleur de normalisation, et dans lequel
    en exécutant l'instruction de multiplication à virgule décimale flottante multi-cycle,
    dans le premier PE, l'additionneur/soustracteur, le décaleur à barillet et le décaleur à barillet normalisent le résultat de la multiplication, sous contrôle par le contrôleur de normalisation, et
    le registre général est utilisé comme un site de stockage temporaire d'un résultat intermédiaire de la normalisation.

10. Processeur SIMD, comprenant une pluralité d'éléments de traitement (PE) (10-1, 10-2) adaptée pour effectuer des opérations comme un groupe, dans lequel les éléments de traitement sont connectés sur un chemin de connexion d'unité d'opération inter-PE bidirectionnel (50), dans lequel le groupe est composé d'une pluralité d'éléments de traitement pour exécuter une instruction multi-cycle qui est plus complexe qu'une instruction exécutable par un seul élément de traitement ; et
    un processeur de contrôle (20) qui génère une instruction et des informations de contrôle pour fournir aux éléments de traitement,
    les éléments de traitement (10-1, 10-2), qui constituent un groupe pour exécuter une instruction multi-cycle, en utilisant des unités d'opération et des registres généraux de celles-ci pour fonctionner comme un processeur d'opération parallèle, dans lequel dans le cas où l'instruction exécutée par ledit un groupe est une instruction de division à virgule décimale flottante multi-cycle,

un premier PE dans ledit un groupe exécute la division de deux opérandes à virgule décimale flottante, et dans lequel
un second PE dans ledit un groupe compte le nombre de cycles d'exécution de la division et normalise le résultat de la division.

11. Processeur SIMD selon la revendication 10, dans lequel le premier PE comprend :

    un additionneur/soustracteur ; et
    un registre général, et dans lequel
    en exécutant l'instruction de division à virgule décimale flottante multi-cycle,
    dans le premier PE, un diviseur, un dividende et un résultat de division intermédiaire sont stockés dans le registre général, et
    le dividende est soustrait par l'additionneur/soustracteur du diviseur pour stocker le résultat de soustraction dans le résultat de division intermédiaire.

12. Processeur SIMD selon la revendication 10, dans lequel le second PE comprend :

    un additionneur/soustracteur ;
    un décaleur à barillet ;
    un registre général ; et
    un contrôleur de normalisation, et dans lequel
    en exécutant l'instruction de division à virgule décimale flottante multi-cycle,
    dans le second PE,
    la valeur de compte de cycle est stockée dans le registre général,
    la valeur de compteur est mise à jour par l'additionneur/soustracteur,
    le résultat de division du premier PE est normalisé par l'additionneur/soustracteur et le décaleur à barillet, sous contrôle par le contrôleur de normalisation, et
    le registre général est utilisé comme un site de stockage temporaire d'un résultat intermédiaire de la normalisation.

13. Processeur SIMD selon la revendication 1, dans lequel des unités d'opération des premier et second PE dans ledit un groupe sont connectées via le chemin de connexion d'unité d'opération inter-PE, dans lequel le premier PE comprend :

    un circuit de contrôle ;
    un ensemble de registres généraux ;
    un ensemble d'unités d'opération ; et
    une mémoire de données, dans lequel
    une sortie de l'ensemble de registres généraux est sélectionnée par un sélecteur (mux1-0) contrôlé par le circuit de contrôle, et est fournie comme opérandes (opr0, opr1) d'une instruction pour des opérations à l'ensemble d'unités d'opération et à la mémoire de données, et dans lequel l'ensemble d'unités d'opération comprend :

un additionneur/soustracteur ;
un multiplicateur ; et
un décaleur à barillet,
des unités d'opération respectives de l'ensemble d'unités d'opération effectuant des opérations sur des opérandes (opr0, opr1) fournis depuis le sélecteur (mux1-0) sous contrôle par le circuit de contrôle,
le résultat des opérations par l'ensemble d'unités d'opération étant sélectionné par un sélecteur (mux1-1), contrôlé par le circuit de contrôle, afin d'être fourni à un sélecteur (mux5),
la mémoire de données écrivant une sortie du sélecteur (mux1-0) et des données d'un réseau de transfert de données de mémoire externe dans un dispositif de mémoire sous contrôle par le circuit de contrôle,
des données lues à partir du dispositif de mémoire étant fournies au sélecteur (mux5) et au réseau de transfert de données de mémoire externe,

le sélecteur (mux5) sélectionnant un parmi :

le résultat de sélection du sélecteur (mux1-1) ;
le résultat de lecture de la mémoire de données ; et
le contenu du registre du second PE fourni via le chemin de connexion d'unité d'opération inter-PE, sous contrôle par le circuit de contrôle, celui sélectionné étant fourni à l'ensemble de registres généraux.

14. Processeur SIMD selon la revendication 13, dans lequel le second PE comprend :

un circuit de contrôle ;
un ensemble de registres généraux ;
un ensemble d'unités d'opération ; et
une mémoire de données, dans lequel l'ensemble d'unités d'opération comprend :

un additionneur/soustracteur ;
un multiplicateur ; et
un décaleur à barillet,
une sortie de l'ensemble de registres généraux étant sélectionnée par le sélecteur (mux2-0), contrôlé par le circuit de contrôle, afin d'être fournie à l'ensemble d'unités d'opération et à la mémoire de données ;

le second PE comprenant en outre :

un sélecteur (mux0) qui sélectionne un du résultat de sélection du sélecteur (mux4) et du résultat de sélection du sélecteur (mux3), sous contrôle par le circuit de contrôle, pour fournir celui sélectionné au premier registre (GPL 20) de l'ensemble de registres ;
un sélecteur (mux1) qui sélectionne un du résultat sélectionné du sélecteur (mux4) et d'une chaîne de bits lue à partir du deuxième registre (GPR 21) de l'ensemble de registres duquel le LSB (Least Significant Bit, bit le moins significatif) a été supprimé et au MSB (Most Significant Bit, bit le plus significatif) duquel est ajouté 0, le sélecteur (mux1) fournissant celui sélectionné au deuxième registre (GPR 21) ; et
un sélecteur (mux2) qui sélectionne un du résultat sélectionné du sélecteur (mux4) et d'une chaîne de bits lue à partir du troisième registre (GPR 22) de l'ensemble de registres duquel le MSB a été supprimé et au LSB duquel est ajouté le MSB du résultat de soustraction de l'additionneur/soustracteur, le sélecteur (mux2) fournissant celui sélectionné au deuxième registre (GPR 22) ;
une unité d'opération de l'ensemble d'unités d'opération effectuant une opération sur les opérandes (opr0, opr1) fournis depuis le sélecteur (mux2-0) sous contrôle par le circuit de contrôle,
le résultat de l'opération étant sélectionné par un sélecteur (mux2-1), contrôlé par le circuit de contrôle, afin d'être fourni au sélecteur (mux4),
la mémoire de données écrivant une sortie du sélecteur (mux2-0) et des données d'un réseau de transfert de données de mémoire externe dans un dispositif de mémoire et des données lues à partir des dispositifs de mémoire étant fournies au sélecteur (mux4) et au réseau de transfert de données de mémoire externe,
le sélecteur (mux3) sélectionnant un du résultat de l'opération de l'additionneur/soustracteur et dudit un opérande sélectionné par le sélecteur (mux2-0), sous contrôle par le circuit de contrôle,
le sélecteur (mux3) fournissant celui sélectionné au sélecteur (mux0),
le sélecteur (mux4) sélectionnant un du résultat de sélection par le sélecteur (mux2-1) et du résultat de lecture de la mémoire de données, sous contrôle par le circuit de contrôle, pour fournir celui sélectionné à l'ensemble de registres généraux.

**15.** Processeur SIMD selon la revendication 4, dans lequel des unités d'opération des premier et second PE dans ledit un groupe sont connectées via le chemin de connexion d'unité d'opération inter-PE, le premier PE comprend :

un circuit de contrôle,
un ensemble de registres généraux et une mémoire de données,
des premier, deuxième et troisième registres (GPR 10, GPR 11 et GPR 12) de l'ensemble de registres généraux étant mis à jour par les résultats de sélection de sélecteurs (mux00, mux01 et mux02) qui y sont associés ; les registres restants de l'ensemble de registres généraux étant mis à jour par le résultat de sélection par un sélecteur (mux07),
une sortie de l'ensemble de registres généraux étant sélectionnée par le sélecteur (mux1-0) et fournie comme opérandes (opr0, opr1) à l'ensemble d'unités d'opération et à la mémoire de données,
le sélecteur (mux00) sélectionnant un du premier opérande (fopr1) d'une instruction d'addition/soustraction à virgule décimale flottante fournie depuis le second PE via le chemin de connexion d'unité d'opération inter-PE et du résultat de sélection par le sélecteur (mux07), sous contrôle par le circuit de contrôle, pour fournir celui sélectionné au premier registre (GPR 10),
le sélecteur (mux01) sélectionnant un du second opérande (fopr1) de l'instruction d'addition/soustraction à virgule décimale flottante fournie depuis le second PE via le chemin de connexion d'unité d'opération inter-PE et du résultat de sélection par le sélecteur (mux07), sous contrôle par le circuit de contrôle, pour fournir celui sélectionné au deuxième registre (GPR 11),
le sélecteur (mux02) sélectionnant un d'une chaîne de bits, composée d'une moitié d'ordre inférieur du résultat de l'opération du différentiateur de l'ensemble d'unités d'opération et d'une moitié d'ordre inférieur du troisième registre (GPR 12) comme moitié inférieure et moitié supérieure, respectivement, et du résultat de sélection par le sélecteur (mux07), pour fournir celui sélectionné au troisième registre (GPR 12), et dans lequel
l'ensemble d'unités d'opération comprend :

un additionneur/soustracteur ;
un multiplicateur ;
un différentiateur ; et
un décaleur à barillet,

l'additionneur/soustracteur effectuant une opération sur le résultat de sélection du sélecteur (mux03) et l'opérande (opr1), comme opérandes, sous contrôle par le circuit de contrôle,
le multiplicateur effectuant une opération sur les opérandes (opr0, opr1), comme opérandes, sous contrôle par le circuit de contrôle,
le différentiateur effectuant une opération sur les résultats de sélection par le sélecteur (mux04) et le sélecteur (mux05), comme opérandes, sous contrôle par le circuit de contrôle,
le décaleur à barillet effectuant une opération sur l'opérande (opr0) et sur le résultat de sélection par le sélecteur (mux06), comme opérandes, sous contrôle par le circuit de contrôle,
le résultat de l'ensemble d'unités d'opération étant sélectionné par le sélecteur (mux1-1), contrôlé par le circuit de contrôle, afin d'être fourni au sélecteur (mux07),
le sélecteur (mux03) sélectionnant un du résultat de l'opération par le décaleur à barillet et de l'opérande (opr0), sous contrôle par le circuit de contrôle, pour fournir celui sélectionné à l'additionneur/soustracteur,
le sélecteur (mux04) sélectionnant un d'une partie exposant (E0) d'un opérande (fopr0) d'une instruction d'addition/soustraction à virgule décimale flottante comme fournie depuis le second PE via le chemin de connexion d'unité d'opération inter-PE, et de l'opérande (fopr0), sous contrôle par le circuit de contrôle, pour fournir celui sélectionné au différentiateur,
le sélecteur (mux05) sélectionnant un d'une partie exposant d'un opérande (fopr1) d'une instruction d'addition/soustraction à virgule décimale flottante comme fournie depuis le second PE via le chemin de connexion d'unité d'opération inter-PE, sous contrôle par le circuit de contrôle, pour fournir celui sélectionné au différentiateur,
le sélecteur (mux06) sélectionnant un d'une chaîne de bits composée d'une moitié d'ordre inférieur du registre (GPR 12) et de 0 bourrés dans une moitié supérieure de celle-ci, et de l'opérande (opr1), sous contrôle par le circuit de contrôle, pour fournir celui sélectionné au décaleur à barillet,
la mémoire de données écrivant des données de l'ensemble de registres généraux et du réseau de transfert de données de mémoire externe dans un dispositif de mémoire et des données lues à partir des dispositifs de mémoire étant fournies au sélecteur (mux07) et au réseau de transfert de données de mémoire externe, sous contrôle par le circuit de contrôle,

le sélecteur (mux07) sélectionnant un du résultat de sélection par le sélecteur (mux1-1) et du résultat de lecture de la mémoire de données sous contrôle par le circuit de contrôle, pour fournir le résultat de sélection à l'ensemble de registres généraux.

16. Processeur pour une opération parallèle selon la revendication 15, dans lequel le second PE comprend :

un circuit de contrôle,
un ensemble de registres généraux ;
un ensemble d'unités d'opération ; et
une mémoire de données,
des premier et deuxième registres (GPR 20, GPR 21) de l'ensemble de registres généraux étant mis à jour par les résultats de sélection de sélecteurs (mux08, mux09) ; un troisième registre (GPR 22) et les registres restants étant mis à jour par le résultat de sélection par une unité de formatage,
une sortie de l'ensemble de registres généraux étant sélectionnée par le sélecteur (mux2-0), contrôlé par le circuit de contrôle, afin d'être fournie comme opérandes (opr0, opr1) à l'ensemble d'unités d'opération et à la mémoire de données,
le sélecteur (mux08) sélectionnant un d'une chaîne de bits composée d'un résultat intermédiaire de parties exposant (tmpe) fournies par le premier PE via le chemin de connexion d'unité d'opération inter-PE comme une partie d'ordre inférieur et d'un résultat du signe (signe) comme un bit supérieur, et du résultat de sélection du sélecteur (mux15), pour fournir celui sélectionné au troisième registre (GPR 20),
le sélecteur (mux09) sélectionnant un du résultat de l'opération du différentiateur de l'ensemble d'unités d'opération et du résultat de sélection du sélecteur (mux15), sous contrôle par le circuit de contrôle, pour fournir celui sélectionné au deuxième registre (GPR 21) de l'ensemble de registres généraux, et dans lequel l'ensemble d'unités d'opération comprend :

un additionneur/soustracteur ;
un multiplicateur ;
un différentiateur ; et
un décaleur à barillet,
l'additionneur/soustracteur effectuant une opération sur les résultats de sélection du sélecteur (mux03) et du sélecteur (mux11), comme opérandes, sous contrôle par le circuit de contrôle,
le multiplicateur effectuant une opération sur les opérandes (opr0, opr1), comme opérandes, sous contrôle par le circuit de contrôle,

le différentiateur effectuant une opération sur les résultats de sélection par le sélecteur (mux12) et le sélecteur (mux13), comme opérandes, sous contrôle par le circuit de contrôle,

le décaleur à barillet effectuant une opération sur l'opérande (opr0) et sur le résultat de sélection par le sélecteur (mux14), comme opérandes, sous contrôle par le circuit de contrôle,

le résultat des opérations de l'ensemble d'unités d'opération étant sélectionné par le sélecteur (mux2-1), contrôlé par le circuit de contrôle, afin d'être fourni au sélecteur (mux15),

le sélecteur (mux10) sélectionnant un du résultat de l'opération par le décaleur à barillet et de l'opérande (opr0), sous contrôle par le circuit de contrôle, pour fournir celui sélectionné à l'additionneur/soustracteur,

le sélecteur (mux11) sélectionnant un d'une valeur 1 et de l'opérande (opr1), sous contrôle par le circuit de contrôle, pour fournir celui sélectionné à l'additionneur/soustracteur,

le sélecteur (mux12) sélectionnant un du résultat intermédiaire de la partie mantisse (tmpf) fournie par le premier PE via le chemin de connexion d'unité d'opération inter-PE, et de l'opérande (opr0), sous contrôle par le circuit de contrôle, pour fournir celui sélectionné au différentiateur,

le sélecteur (mux13) sélectionnant un de la valeur 0 et de l'opérande (opr1), sous contrôle par le circuit de contrôle, pour fournir celui sélectionné au différentiateur,

le sélecteur (mux14) sélectionnant un du résultat de l'opération du un en tête et de l'opérande (opr1) pour fournir celui sélectionné au décaleur à barillet,

l'ensemble d'unités d'opération comprenant un un en tête, un additionneur et une unité de détection d'arrondi, utilisés exclusivement pour l'exécution d'une instruction d'addition/soustraction à virgule décimale flottante,

le un en tête récupérant la chaîne de bits de l'opérande (opr0) d'un côté MSB pour calculer la distance du MSB à la première apparition de 1 afin de fournir la distance calculée à l'additionneur et au sélecteur (mux14),

l'additionneur sommant une chaîne de bits partielle de l'opérande (opr1) au résultat récupéré du un en tête pour fournir le résultat de l'addition à l'unité de formatage,

l'unité de détection d'arrondi décidant si oui ou non le résultat des opérations par le décaleur à barillet a besoin d'arrondi, et fournissant le résultat de la décision au sélecteur (mux2-1),

la mémoire de données écrivant des données de l'ensemble de registres généraux et du réseau de transfert de données de mémoire externe dans un dispositif de mémoire et des données lues à partir des dispositifs de mémoire étant fournies au sélecteur (mux15) et au réseau de transfert de données de mémoire externe, sous contrôle par le circuit de contrôle,

le sélecteur (mux15) sélectionnant un du résultat de sélection par le sélecteur (mux2-1) et du résultat de lecture de la mémoire de données, sous contrôle par le circuit de contrôle, pour fournir celui sélectionné à l'unité de formatage,

l'unité de formatage sélectionnant le résultat de sélection par le sélecteur (mux15) comme une partie mantisse, sélectionnant le résultat de l'opération par l'additionneur/soustracteur comme une partie exposant et sélectionnant le résultat du signe (signe) comme une partie signe, sous contrôle par le circuit de contrôle ; l'unité de formatage établissant la forme et fournissant la forme résultante à l'ensemble de registres généraux.

FIG. 1

20 CP
21 PC Ctr
22 RegFiles-0
23 OPERATION UNIT SET -0
24 PRAM
25 DRAM

30 EMEM

40; EMEM DATA TRANSFER NETWORK

60; PE CONTROL INFORMATION PATH

10-1
PE-1   PE Ctr-1   11-1
RegFiles-1   12-1
OPERATION UNIT SET -1   13-1
RAM-1   14-1

10-2
PE-2   PE Ctr-2   11-2
RegFiles-2   12-2
OPERATION UNIT SET -2   13-2
RAM-2   14-2

10-m
PE-m   PE Ctr-m   11-m
RegFiles-m   12-m
OPERATION UNIT SET -m   13-m
RAM-m   14-m

50; INTER-PE OPERATION UNIT CONNECTION PATH

EP 2 144 158 B1

36

FIG.2

PE CONTROL SIGNAL

60

10-1

PE-1

11-1  PE Ctr-1

RegFiles-1

12-1

GPR10  GPR11  GPR12  ....  GPR1p

opr0  opr1  mux1-0

Add/Sub-1  Mul-1  ....  Barrel Shifter-1

MSB

mux5

OPERATION UNIT SET 1

mux1-1

RAM-1

13-1

14-1

10-2

PE-2

11-2

PE Ctr-2

RegFiles-2

12-2

mux0  mux1  mux2

GPR20  GPR21  GPR22  ....  GPR2p

mux3

opr0  opr1  mux2-0

MSB

Add/Sub-2  Mul-2  ....  Barrel Shifter-2

mux4

OPERATION UNIT SET 2

mux2-1

RAM-2

13-2

14-2

From CP

To CP

40

50: INTER-PE OPERATION UNIT CONNECTION PATH

EP 2 144 158 B1

37

# FIG. 3

START

INITIALIZE GENERAL
PURPOSE REGISTERS — 1000

SUBTRACT GPR 11
FROM GPR 10
BY ADD/ SUB-1 — 1001

PLUS OR MINUS OF
THE RESULT OF
OPERATION BY ADD/ SUB -1 — 1002

PLUS

MINUS — 1005

SAVE RESULT OF DIVISION
IN GENERAL PURPOSE
REGISTERS

SUBTRACT GPR 21
FROM GPR 20
BY ADD/ SUB-2 — 1003

UPDATE GENERAL
PURPOSE REGISTERS — 1004

END

# FIG. 4

| t | t+1 | t+2 | ... | t+f | CYCLES |
|---|---|---|---|---|---|
| START<br>S1000 | S1001<br>S1002<br>S1003<br>S1004 | S1001<br>S1002<br>S1003<br>S1004 | ⋮ | S1001<br>S1002<br>S1005<br>END | |

FIG. 5

# FIG. 6

± [SIGN PART]1. [MANTISSA PART] × ^[EXPONENT PART]

FIG. 7

FIG. 8

# FIG. 9

START

INITIALIZE GENERAL PURPOSE REGISTERS ⟵ 2000

CALCULATE DIFFERENCE OF EXPONENT PARTS (E0, E1) BY ABS-1 ⟵ 2001

SAVE RESULT OF DIFFERENCE TAKING OF MANTISSA PARTS (F0, F1) IN GPR 10 ~ GPR 12 ⟵ 2002

SELECT OPR0 AND OPR1 BY MUX1-0 BASED ON RELATIVE MAGNITUDES OF EXPONENT PARTS (E0, E1) ⟵ 2003

ADD/ SUBTRACT OPR0, OPR1 BY ADD/ SUB -1 ⟵ 2004

SAVE DIFFERENCE RESULT AND RESULT OF ADD/ SUBTRACT IN GPR 12 AND GPR 13 ⟵ 2005

CALCULATE DIFFERENCE BETWEEN ADD/ SUBTRACT RESULT AND 0 IN ABS-2 ⟵ 2006

SAVE SIGN AND DIFFE, RESULT OF ADD/ SUBTRACT IN GPR 20 AND GPR 21 ⟵ 2007

A

A

SELECT GPR 21, GPR 20 BY MUX2-0 IN OPR0 AND OPR1 ⟵ 2008

DETECT LEFTMOST 1 OF OPR0 BY LEADING-ONE ⟵ 2009

SHIFT OPR0 BY BARREL SHIFTER-2 BASED ON LEADING-ONE RESULT ⟵ 2010

ADD OPR1 TO LEADING-ONE RESULT BY ADD ⟵ 2011

ADD 1 TO SHIFT RESULT BY ADD/ SUB-2 ⟵ 2012

CHECK IF SHIFT RESULT IS TO BE ROUNDED BY ROUND ⟵ 2013

SELECT RESULT OF ADD/ SUB-2 OR RESULT OF SHIFT IN MUX2-1 BASED ON ROUNDING DECISION ⟵ 2014

SET FORM OF RESULT OF OPERATION IN ORDER BY FORM AND SAVE IN REGFILES-2 ⟵ 2015

END

EP 2 144 158 B1

## FIG. 10

| t | t+1 | t+2 | t+3 | t+4 | CYCLE |
|---|---|---|---|---|---|
| START<br>S2000 | S2001<br>S2002 | S2003<br>S2004<br>S2005 | S2006<br>S2007 | S2008<br>≀<br>S2015<br>END | |

# FIG. 11

| OPERATION SORTS<br><br>SIGN<br>(S0, S1) | ADD | SUBTRACT |
|---|---|---|
| 00 | ADD | SUBTRACT |
| 01 | SUBTRACT | ADD |
| 10 | SUBTRACT | ADD |
| 11 | ADD | SUBTRACT |

# FIG. 12

| OPERATION SORTS/ PLUS, MINUS  SIGN (S0, S1) | ADD/ PLUS | ADD/ MINUS | SUBTRACT/ PLUS | SUBTRACT/ MINUS |
|---|---|---|---|---|
| 00 | + | + | − | + |
| 01 | − | + | + | + |
| 10 | + | − | − | − |
| 11 | − | − | + | − |

FIG. 13

EP 2 144 158 B1

48

FIG. 14

EP 2 144 158 B1

# FIG. 15

```
START
```

↓

INITIALIZE GENERAL
PURPOSE REGISTERS —3000

↓

ADD
EXPONENT PARTS (E0, E1)
IN ADD/SUB -1 —3001

↓

MULTIPLY
MANTISSA PARTS (F0, F1)
IN MUL-1 —3002

↓

XOR SIGN PARTS (S0, S1) —3003

↓

SAVE RESULTS OF
OPERATION ON EXPONENT,
MANTISSA AND SIGN PARTS
IN GPR 12, GPR 1P-1 AND GPR 1P —3004

↓

DETECT
LEFTMOST 1 OF TMPF
BY LEADING-ONE —3005

↓

SHIFT
TMPF BY BARRELSHIFTER-1/2
BASED ON RESULT OF LEADING-ONE —3006

↓

( B )

---

( B )

↓

ADD TMPE0
TO LEADING-ONE RESULT BY ADD —3007

↓

SUBTRACT 127
FROM TMP1 BY SUB —3008

↓

ADD 1 TO SHIFT RESULT
BY ADD/ SUB -2 —3009

↓

CHECK BY ROUND
IF SHIFT RESULT IS
TO BE ROUNDED —3010

↓

SELECT ADD/ SUB-2 RESULT
OR SHIFT RESULT BY MUX2-1
BASED ON ROUNDING DETECTION —3011

↓

SET FORM OF RESULT OF OPERATION
IN ORDER BY FORM AND
SAVE IN REGFILES -2 —3012

↓

```
END
```

# FIG. 16

| t | t+1 | t+2 | CYCLE |
|---|---|---|---|
| START<br>S3000 | S3001<br>S3002<br>S3003<br>S3004 | S3005<br>∫<br>S3012<br>END | |

FIG. 17

PE CONTROL INFORMATION PATH

50; INTER-PE OPERATION UNIT CONNECTION PATH

From CP

To PE-2

EP 2 144 158 B1

FIG. 18

PE CONTROL INFORMATION PATH

PE-2    10-2    11-2

END

PE Ctr-2    MSB

QUO    RegFiles-2    12-2

mux05

GPR20    GPR21    GPR22    ••••    GPR2p

••••

mux2-0    opr0 opr1

sign,
tmpe

tmpe

50; INTER-PE OPERATION
UNIT CONNECTION PATH

Leading
One    mux06    mux07    FORMATTING

Add    Add/
Sub-2    Mul-2    •••    Barrel
Shifter-2    form    13-2

sign
Round
Round    Round
Decision    mux2-1    ••••    mux08

OPERATION UNIT SET-2

RAM-2    14-2

From PE-1    To CP

40

EP 2 144 158 B1

# FIG. 19

```
                    START

              INITIALIZE GENERAL          4000
              PURPOSE REGISTERS

              SUBTRACT EXPONENT           4001
              PARTS (E0, E1) IN SUB

              XOR SIGN PARTS (E0, E1)     4002

              SAVE RESULTS OF
              OPERATIONS ON MANTISSA,     4003
              EXPONENT AND SIGN PARTS
              IN GPR 10, GPR 11 AND GPR 12

              SUBTRACT GPR 22
              FROM GPR 21                 4004
              IN ADD/ SUB -2

              CHECK PLUS/MINUS            4005
              OF RESULT OF OPERATION              C
              OF ADD/ SUB-2        MINUS

                        PLUS

              SUBTRACT OPR1 FROM OPR0     4006
              BY ADD/ SUB-1

              SELECT OPR0 OR RESULT OF
              SUBTRACTION BY MUX03        4007
              BASED ON PLUS/MINUS
              OF RESULT OF SUBTRACTION

              UPDATE GENERAL             4008
              PURPOSE REGISTERS
```

```
                      C

              DETECT LEFTMOST 1 POSITION   4009
              OF GPR 20 BY LEADING-ONE

              SHIFT GPR 20 BY
              BARREL SHIFTER-2 BASED ON    4010
              LEADING-ONE RESULT

              ADD RESULT OF LEADING-ONE    4011
              TO TMPE BY ADD

              ADD 1 TO SHIFT RESULT        4012
              BY ADD/ SUB-2

              CHECK BY ROUND
              IF SHIFT RESULT IS           4013
              TO BE ROUNDED

              SELECT ADD/ SUB -2 RESULT
              OR SHIFT RESULT BY MUX2-1    4014
              BASED ON ROUNDING DECISION

              SET FORM OF RESULT OF
              OPERATION IN ORDER BY FORM   4015
              AND SAVE IN REGFILES -2

                     END
```

FIG. 20

| | t | t+1 | t+2 | t+3 | ··· | t+f | TIME |
|---|---|---|---|---|---|---|---|
| | START S4000 | S4001 S4002 S4003 | S4004 ∫ S4008 | S4004 ∫ S4008 | ··· | S4004 S4005 S4009 ∫ S4015 END | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007088656 A
- JP 2000148695 A
- JP 2001256199 A
- JP 6051984 A

### Non-patent literature cited in the description

- **M. NAKAJIMA et al.** A 40 GOPS 250 mW Massively Parallel Processor Based on Matrix Architecture. *2006 IEEE International Solid-State Circuits Conference Digest of Technical Paper step,* 06 February 2006, 1616-1625